# EUROPEAN PATENT APPLICATION

(11) **EP 4 163 833 A1**
(43) Date of publication of application: **12.04.2023**
(21) Application number: 22186944.9
(22) Date of filing: 26.07.2022
(51) Int. Cl.: G06N 3/04, G06N 3/08, G06N 20/10, G06N 20/20, G06N 3/063

(54) **DEEP NEURAL NETWORK MODEL DESIGN ENHANCED BY REAL-TIME PROXY EVALUATION FEEDBACK**

(30) Priority: 08.10.2021 US 202117497736
(71) Applicant: Intel Corporation, Santa Clara, CA 95054 (US)
(72) Inventor: Cummings, Daniel J., Austin, 78735 (US); Nittur Sridhar, Sharath, San Diego, 92126 (US)
(74) Representative: Goddar, Heinz J.

(57) **Abstract**

The present disclosure is related to artificial intelligence (AI), machine learning (ML), and Neural Architecture Search (NAS) technologies, and in particular, to Deep Neural Network (DNN) model engineering techniques that use proxy evaluation feedback. The DNN model engineering techniques discussed herein provide near real-time feedback on model performance via low-cost proxy scores without requiring continual training and/or validation cycles, iterations, epochs, etc. In conjunction with the proxy-based scoring, semi-supervised learning mechanisms are used to map proxy scores to various model performance metrics. Other embodiments may be described and/or claimed.

## Description

### TECHNICAL FIELD

Embodiments described herein generally relate to artificial intelligence (AI), machine learning (ML), and Neural Architecture Search (NAS) technologies, and in particular, to techniques for Deep Neural Network (DNN) model engineering.

### BACKGROUND

Machine learning (ML) is the study of computer algorithms that improve automatically through experience and by the use of data. Performing machine learning involves creating a statistical model (or simply a "model"), which is configured to process data to make predictions and/or inferences. ML algorithms build models using sample data (referred to as "training data") and/or based on past experience in order to make predictions or decisions without being explicitly programmed to do so.

ML model design is a lengthy process that involves a highly iterative cycle of training and validation to tune the structure, parameters, and/or hyperparameters of a given model. The training and validation can be especially time consuming and resource intensive for larger ML architectures such as deep neural networks (DNNs) and the like. Conventional ML design techniques may also require relatively large amounts of computational resources beyond the reach of many users.

Proxy tasks may be used for ML model design in order to reduce the length of time and resource consumption. Proxy tasks may include, for example, training for fewer epochs than a full training session, learning with fewer blocks, or training with a subset of a full training dataset (i.e., a "training subset"). Using proxy tasks, the number of training/validation iterations can be reduced, which should reduce the time and resource consumption used for training. However, training ML models using a proxy tasks can result in less accurate models. Additionally, using proxy tasks can still be very lengthy and resource intensive for larger state-of-the-art DNN models. Indeed, for very large models, training using a data subset could still be prohibitive to users without access to large compute resources and would come at the cost of predictive accuracy.

Instead of manually designing an ML model, Neural Architecture Search (NAS) algorithms can be used to automatically discover an ideal ML model for a particular task (see e.g., Abdelfattah et al., "Zero-Cost Proxies for Lightweight NAS." ArXiv abs/2101.08134 (20 Jan. 2021) ("[Abdelfattah]"), which is hereby incorporated by reference in its entirety). NAS is a process of automating architecture engineering. However, NAS can also be time consuming and computationally intensive; typically using NAS can take many hours or days to fully train a single neural network (see [Abdelfattah]).

In conventional sample-based NAS, a proxy training regime can be used to predict a model's accuracy instead of full training (see [Abdelfattah]). This involves using a proxy function to produce a proxy score that gives a rough approximation of a model's performance. However, proxy functions do not always correlate well to the metric they are approximating (see e.g., Mellor et al., "Neural Architecture Search without Training", Int'l Conference on Machine Learning, PMLR, pp. 7588-7598 (01 Jul. 2021) ("[Mellor]"), which is hereby incorporated by reference in its entirety), which is why proxy function are still an active area of research.

### BRIEF DESCRIPTION OF THE DRAWINGS

In the drawings, which are not necessarily drawn to scale, like numerals may describe similar components in different views. Like numerals having different letter suffixes may represent different instances of similar components. Some embodiments are illustrated by way of example, and not limitation, in the figures of the accompanying drawings in which:
Figure 1 depicts an overview of a machine learning (ML) model engineering system according to various embodiments. Figure 2 depicts an example operation of a semi-supervised learning mechanism according to various embodiments.
Figure 3 depicts an example artificial neural network (ANN) according to various embodiments. Figure 4a illustrates an example accelerator architecture. Figure 4b illustrates an example components of a computing system. Figures 5 and 6 depict an example procedure that may be used to practice the various embodiments discussed herein.

### DETAILED DESCRIPTION

The present disclosure is related to artificial intelligence (AI), machine learning (ML), and Neural Architecture Search (NAS) technologies, and in particular, to techniques for designing Deep Neural Network (DNN) models using proxy evaluation feedback. The DNN model design approaches discussed herein provide near real-time feedback on model performance via low-cost proxy scores without requiring continual training and/or validation cycles, iterations, epochs, etc. In conjunction with the proxy-based scoring, semi-supervised learning (SSL) mechanisms are used to map proxy scores to various model performance metrics (e.g., latency, accuracy, etc.).

In particular, instead of performing conventional training validation iterations to determine the performance of a model architecture that has been proposed, a proxy function is used to give an estimation of a neural network's performance. Additionally, an SSL mechanism is appended to the proxy function to convert the proxy scores into meaningful metrics. The SSL mechanism augments the proxy scores to improve metric correlation, or to map the proxy scores into meaningful model performance values. As mentioned previously, existing proxy functions produce proxy scores that give a rough estimate of a model's performance. These existing proxy functions are usually used in a one-shot fashion within a neural architecture search (NAS) framework. In contrast to these existing approaches, the proxy functions discussed herein are interactively used during the model engineering process.

Additionally, the model engineering system discussed herein can take into account specific hardware platform attributes to give hardware-aware performance estimations. Additionally, the model engineering system is applicable across the spectrum of DNN application domains (e.g. classification, natural language processing (NLP) and/or natural language understanding (NLU), image, segmentation, recommendation, etc.).

For training DNN models, especially larger DNNs (e.g., those high network parameter counts), it usually takes a relatively long time to get training/validation feedback on the model performance for each parameter configuration. The model engineering system discussed herein provides ML model performance feedback extremely fast (in terms of run time or execution time) in comparison to typical training/validation systems. The model engineering system discussed herein is the first DNN model tuning approach that holistically integrates proxy scoring functions and objective mappings using SSL, which may be done in a hardware-aware manner. The use of such a system can dramatically reduce the time and computational resource consumption needed to effectively engineer ML models in comparison with existing techniques. In addition, by reducing the time consumption and computational complexity of ML model engineering, the model engineering system can make AI/ML techniques more widely available to users and communities that traditionally lack access to the vast resources needed to perform conventional ML model design.

### 1. MACHINE LEARNING MODEL ENGINEERING SYSTEM

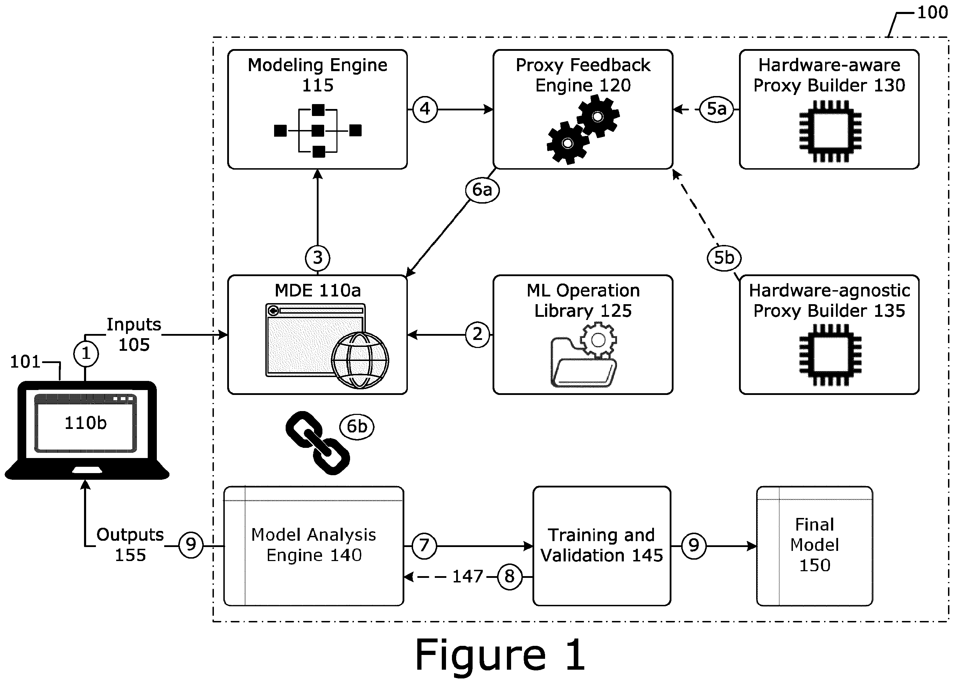

Figure 1 shows an example ML model engineering system 100 according to various embodiments. The ML model engineering system 100 includes a model development environment (MDE) 110a, a modeling engine 115 (or "modeler 115"), a proxy feedback engine 120, an ML operations library 125, a hardware-aware proxy builder 130, a hardware-agnostic proxy builder 135, a model analysis engine 140, a training and validation engine 145, and a final model output 150. Operation of the system 100 may be as follows.

At step 1, a client device 101 provides inputs 105 to the MDE 110a. In Figure 1, the client device 101 is shown as a laptop computer, however, the client device 101 may be any other type of client or user device such as those discussed herein. To interact with the MDE 110a, the client device 101 operates an MDE client application (app) 110b (hereinafter referred to as "MDE 110b"), which may be a suitable client such as web browser, a desktop app, mobile app, a web app, and/or other like element that is configured to operate with the MDE 110a via a suitable communication protocol (e.g., hypertext transfer protocol (HTTP) (or variants thereof), Message Queue Telemetry Transport (MQTT), Real Time Streaming Protocol (RTSP), and/or the like). The MDE 110a allows a user of the client device 101 to manage how the ML model is to be built by the system 100. The MDE 110a is a server-side app or the like that allows a user to provide inputs 105 to the system 100 using their MDE 110b. For example, the MDE 110a and MDE 110b (collectively referred to as "MDE 110") provides a platform or framework that allows ML model designers, developers, and/or other types of users to create, edit, and/or manipulate ML models and/or ML applications. The MDE 110 comprises a graphical user interface (GUI) including various graphical elements/objects that allow users to add, update, and/or change various ML model operations, parameters, hyperparameters, and/or other like ML model aspects. In some implementations, the MDE 110b may be the same or similar to a software development environment (SDE), an integrated development environment (IDE), a software development kit (SDK), a software development platform (SDP), etc., that are used for app development. Additionally, the MDE 110a includes application programming interfaces (APIs) to access the other subsystems of system 100, manages library dependencies and the ML backend (e.g., PyTorch, TensorFlow, Apache^{™} MXNet, etc.) 125, manages the ML model and parameter updates 115, and calls the supported tensor library (indicated by the inputs 105).

The inputs 105 include one or more of AI/ML task(s), AI/ML domain, suitable dataset(s), supported libraries (e.g., tensor libraries, etc.), an initial ML model, desired hardware platforms and/or configurations, parameters and/or hyperparameters, and/or other like parameters. The AI/ML tasks may describe a desired problem to be solved and the AI/ML domain may describe a desired goal to be achieved. Examples of ML tasks include clustering, classification, regression, anomaly detection, data cleaning, automated ML (autoML), association rules learning, reinforcement learning, structured prediction, feature engineering, feature learning, online learning, supervised learning, semi-supervised learning (SSL), unsupervised learning, machine learned ranking (MLR), grammar induction, and/or the like. ML domains include, reasoning and problem solving, knowledge representation and/or ontology, automated planning, natural language processing (NLP), perception (e.g., computer vision, speech recognition, etc.), autonomous motion and manipulation (e.g., localization, robotic movement/travel, autonomous driving, etc.), and social intelligence. The inputs 105 may include instructions/commands to perform an AI/ML task for an AI/ML domain in the form of, for example, "*perform object recognition for computer vision*"*.* In this example, "*object recognition*" is the AI/ML task and "*computer vision*" is the AI/ML domain. Another example may be "*perform regression looking for accuracy for NLP*" where "*regression looking for accuracy*" is the AI/ML task and "*NLP*" is the AI/ML domain.

The inputs 105 can also include an appropriately formatted dataset (or a reference to such a dataset). Here, an appropriately formatted dataset refers to a dataset that corresponds to the specified AI/ML task and/or AI/ML domain. For example, a dataset that would be used for the NLP domain would likely be different than a dataset used for the computer vision domain. In some implementations, the inputs 105 may include, or may be an information object, file, electronic document, etc., in any suitable form or format such as, for example, a suitable mark-up language document (e.g., HyperText Markup Language (HTML), Extensible Markup Language (XML), AI Markup Language (AIML), JavaScript Object Notation (JSON), etc.), a columnar file format (e.g., Hierarchical Data Format (HDF) including HDF4, HDF5, etc.; Hadoop distributed file system (HDFS); Apache^{®} Parquet, petastorm; etc.), tabular text-based format (e.g. comma separated values (csv), spreadsheet file formats (e.g., .xlsx, etc.)), model file formats (e.g., protocol buffer files (.pb file extension), Keras (.h5 file extension), python (.pkl file extension), PyTorch models (.pt file extension), predictive model markup language (.pmml file extension), the .mlmodel file format, etc.), and/or the like.

At step 2, ML operations are provided to the MDE 110a and/or the modeler 115. The ML operations library 125 is included to provide ML operations compatible with the indicated AI/ML task(s) and AI/ML domain. This is because not all proxy functions work with all ML operation types. In some implementations, the ML operations indicated by the ML operation library 125 may be, or include, tensor operations, convolutions, activation functions (e.g., linear activations, rectifiers or rectified linear units (ReLUs), parametrics ReLUs (PReLUs), Gaussian error linear units (GELUs), exponential linear units (ELUs), scaled ELUs (SELUs), Sigmoid linear units (SiLUs), Heaviside activation, logistic activation, etc.). The compatible operations may be provided to the user via the MDE 110 as a list of compatible ML operations with the initial starting point ML model.

At step 3 (which may be performed before, after, or simultaneoulsy with step 2), the MDE 110a provides the inputs 105 to the modeler 115, which generates or otherwise obtains an initial ML model based on the provided inputs 105. In some implementations, the ML model can be designed/generated as high level abstractions of tensor operation layers. In other implementations, the ML model is designed/generated in fine detail in the form a computational graph. Additionally or alternatively, the user may select the level of detail for the ML model design via the MDE 110.

Furthermore, the modeler 115 may generate the model using, for example, the user-provided model configuration. In some implementations, the user-provided model configuration could be the user's best guess at an ideal or optimal ML model and the modeler 115 may update the model based on the other provided inputs 105. Additionally or alternatively, the modeler 115 may obtain a suitable model from a repository or data store such as when the user does not provide an initial ML model configuration. In these implementations, the modeler 115 may modify the obtained model according to the inputs 105.

In some implementations, when the initial ML model is generated or obtained by the modeler 115, the MDE 110a may output 155 the initial ML model to the client device 101 via the MDE 110b. The initial model may be edited, adjusted, or altered by the user using the MDE 110b, which can then be submitted back to the MDE 110a for further updates/refinement. These steps/operations can be repeated in this fashion until the model is submitted for the full or partial training and test run by the training and validation engine 145. For example, where no ML model configuration is provided by the user, a baseline example model is offered by the system 100 based on the AI/ML task and AI/ML domain inputs 105. This may be a basic ML model configuration that can be used as a starting point, which may then be altered or adjusted by the user using the MDE 110b.

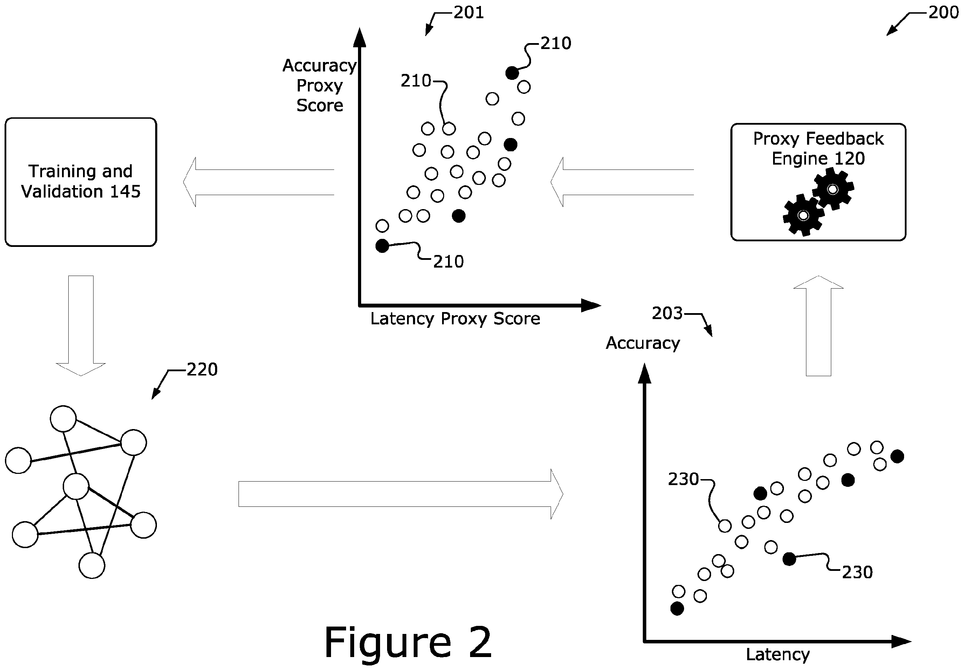

The architectural changes that occur during the ML model design stage (e.g., steps 1, 2, and 3) are automatically updated into a backend AI/ML language/format (e.g., Torch, PyTorch, TensorFlow, Keras, OpenNN, AI markup language (AIML), etc.) and sent to the proxy feedback engine 120 at step 4. The proxy feedback engine 120 determines a proxy score for the ML model against a set of objective performance metrics (e.g., performance fitness and error metrics (PFEMs)). The proxy feedback engine 120 may employ a suitable proxy function such as, for example, trained predictors, look up tables (LUTs), sum of gradients, and/or the like. More details on the proxy functions that may be used by the proxy feedback engine 120 are discussed infra in section 1.1, and examples of the performance metrics are discussed infra in section 1.2. At first, proxy scores may be generated based on mapping, and over time, an SSL mechanism may be used to improve the original proxy scores and their mappings (see e.g., section 1.3 and Figure 2).

At step 5a, the hardware-aware proxy builder 130 provides hardware performance benchmarks or performance estimation scores to the proxy feedback engine 120. This allows the system 100 to take into account the hardware platform attributes to give hardware-aware performance estimations. The hardware platform details/specifications can be input 105 by the user or mined from the client device 101. For example, if the user wishes to have a throughput, latency, power estimation used for the objective performance metrics mentioned previously, the hardware-aware proxy builder 130 can run a benchmark or performance score on the indicated hardware platform on which the ML model is to be deployed, which is then provided to the proxy feedback engine 120. The benchmark or performance score can be in the form of lookup tables, indicators, predictors, or some other suitable data structure for the proxy feedback engine 120. Additionally or alternatively, at step 5b, the hardware-agnostic proxy builder 135 can determine other approximations of hardware performance, such by using the number of parameters and/or hyperparameters in the model to determine a hardware performance proxy score, which is then provided to the proxy feedback engine 120. The use of the hardware-aware proxy builder 130 and/or the hardware-agnostic proxy builder 135 is user selectable. In these ways, the user can choose to build a specific ML model for a specific hardware platform. In one example, the user can input 105 various hardware (technical) details for an IoT device or autonomous sensor such as an image sensor for an object recognition model. In another example, the user can input 105 or otherwise indicate a specific cloud computing platform/service (and optionally, available resources based on their cloud service subscription or account details) for an NLP model (e.g., for a chatbot or the like). In these examples, the hardware (technical) details may include information about the processor(s), memory devices, chipset, sensor types, etc.

In some implementations, the proxy feedback engine 120 is triggered in response to receipt of a user input (e.g., upon the user pressing a "submit button" in the UI 105) instead of being triggered automatically. In either implementation, the proxy feedback engine 120 analyzes the computational graph provided by the modeling engine 115 and the performance scores provided by the proxy builders 130 and/or 135 (if any), and based off the AI/ML task and AI/ML domain, will provide a proxy score based on a number of objective metrics that are applicable to the AI/ML task and AI/ML domain such as those mentioned herein. At step 6a, the proxy score is provided to the MDE 110a and/or the model analysis engine 140 to be ranked or otherwise analyzed and/or output 155 to the client device 105. Additionally or alternatively, the various scores may then be stored in association with the various models (or a reference to such models in a library of ML models) for future ML model analyses.

As the list of ML model variations are created by the modeling engine 115 and proxy scores are gathered by the proxy feedback engine 120, at step 6b, the model analysis engine 140 begins sorting and ranking the models based on the AI/ML task/domain specific performance metrics. In some implementations, the model analysis engine 140 operates as a background process during operation of the modeling engine 115 and proxy feedback engine 120.

At step 7, training and testing by the training and validation engine 145 begins using the generated ML model. In some implementations, the training and validation engine 145 can train the ML model using a full training dataset (e.g., "full training"), while in other implementations, training and validation engine 145 can train the ML model using a partial training datasets (training subsets) (e.g., "partial training"). In some implementations, the user or the system 100 can decide when to begin the training and testing to apply the semi-supervised feedback mechanism (which is discussed in more detail infra in section 1.3 and with respect to Figure 2). In user directed implementations, the user may select or activate a graphical control element (e.g., a "start full training" button or the like) in the MDE 110b to begin the training and testing 145. In system directed implementations, the the system 100 may be triggered to activate the training and testing 145 in response to some event or criteria such as a certain number of models being generated for the user (e.g., 10 models), after a certain period of time of using the MDE 110b, and/or the like. Additionally or alternatively, the system 100 may provide the user with the generated ML model 150 based solely on the proxy score without performing the testing and training 145. At step 8, the training and validation engine 145 provides SSL feedback 147 to the model analysis engine 140 for improving the proxy functions and/or the mappings of performance metrics to ML model aspects. At step 9, results of the training and testing 145 operations provide the final model output 150, which is then provided to the client device 101 as outputs 155.

Until the SSL mechanism starts, the model performance summaries are in the form of proxy scores. To start and enable the semi-supervised feedback 147, suggestions for models on which to perform full training/validation 145 can be given by random selection, user guidance or inputs 105, and/or by distance metric bounds. For example, after a large set of models with proxy scores are generated, a small subset of those models could be run through full training/validation 145. The results of the full training/validation runs 145 can then be used with a semi-supervised predictor model (see e.g., section 1.3 and Figure 2), which requires some training itself, to map the proxy scores to actual performance metrics. By nature of SSL, during the proxy to performance mapping, the ranking between models becomes more accurate.

In some implementations, some or all of the elements 110-150 of the ML model engineering system 100 are operated by an individual compute node. For example, the ML model engineering system 100 may be part of a cloud computing service where the MDE 110a is operated by one or more application servers and the modeler 115, proxy feedback engine 120, tensor operations library 125, hardware-aware proxy builder 130, hardware-agnostic proxy builder 135, model analysis engine 140, and training and validation engine 145 are operated by respective cloud compute nodes. In another implementation, some or all of the elements 110-150 of the ML model engineering system 100 are software elements operated by a single compute node (e.g., an application server, an edge computing service, a content delivery network (CDN) node, etc.).

### 1.1. PROXY FEEDBACK ENGINE

As mentioned previously, the proxy feedback engine 120 implements one or more proxy functions to generate proxy scores to predict ML model performance. For purposes of the present disclosure, a "proxy function" refers to any function that takes one or more variables, parameters (e.g., model parameters and/or hyperparameters), data, ML model architectural aspects (e.g., NN layer types (e.g., convolutional layers, multilayer perception (MLP) layers, etc.), NN layer configurations, and/or the like as inputs, and produces an output that is a replacement, substitute, stand-in, surrogate, or representation of the inputs. In contrast to proxy functions used for NAS techniques, the proxy functions used by the proxy feedback engine 120 are used to approximate model performance for ML model design/engineering rather than being used to discover an ML model for a particular task (as is the case for NAS).

Furthermore, at least in some embodiments, the proxy functions for approximating ML model performance can be classified as standard proxies and low-cost proxies. Examples of standard proxy functions include functions and/or data structures that map keys to values (e.g., associative arrays, mapping functions, dictionaries, hash tables, LUTs, linked lists, etc.), ML classifiers, and/or the like. In an example LUT implementation, the standard proxy function can be a tensor stage-wise LUT for latency prediction. In a ML classifier implementation, the ML classifier can be a trained performance predictors for classification accuracy. A downside of using standard proxy functions is that they may require up-front training themselves (e.g., >1000 training examples) in order to be accurate.

Low-cost proxy functions allow for quick approximations of ML model performance without the requirement for a predictor needing to be trained (see e.g., [Abdelfattah], [Mellor]). In general, the low-cost proxy functions are functions that utilize untrained ML models to obtain an approximation of performance. Usually, low-cost proxy functions send a very small batch of data (a "mini-batch") through an untrained ML model rather than performing full training validation cycles. These types of proxy functions may be viewed as "low cost" (in terms of resource concumption) because such proxy functions do not require any upfront ML training and can be run on an arbitrary untrained ML model.

Some examples of low-cost proxy functions include parameter counting, computational throughput metrics, Jacobian covariance, saliency pruning, channel pruning, and heuristic and/or hyper-heuristic functions. Parameter counting involves counting the number of network parameters in an ML model, which may be used as a latency proxy. Computational throughput metrics, such as floating point operations per second (FLOPs), multiply and accumulates (MACs), and multiply adds (MAdds) operations, can also be used as latency proxies. Jacobian covariance captures the correlation of activations within a network when subject to different inputs within a minibatch of data (see e.g., [Mellor]). For Jacobian covariance, a mini-batch of data is sent through the untrained ML model and then the different activations within the ML model are read out and used as the proxy score(s).

Saliency pruning involves removing specific parameters based on saliency metrics, which changes the gradient norm (see e.g., Lee et al., "SNIP: Single-Shot Network Pruning based on Connection Sensitivity", Int'l Conference on Learning Representations (ICLR) 2019 (06 May 2019) ("[Lee]"), which is hereby incorporated by reference in its entirety). In other words, saliency pruning involves searching for high level characteristics of what the activations or gradients look like within an ML model. Channel pruning can be thought of as a subset of saliency pruning. Channel pruning involves pruning with parameter loss estimations to project performance (see e.g., Turner et al., "BlockSwap: Fisher-guided Block Substitution for Network Compression on a Budget", arXiv:1906.04113v2 (23 Jan. 2020) ("[Turner]"), which is hereby incorporated by reference in its entirety).

Heuristic functions (or simply a "heuristic") is a function that ranks alternatives in search algorithms at each branching step based on available information to decide which branch to follow. Hyper-heuristics include search methods that seek to automate the process of selecting, combining, generating, and/or adapting several simpler heuristics (or components of such heuristics) to efficiently solve computational search problems, often by the incorporation of other ML techniques.

Furthermore, the proxy functions used by the proxy feedback engine 120 are treated flexible and modular such that different proxy functions can be swapped in and out based on AI/ML task, specified performance metrics to be evaluated, and/or the like. This modularity also allows as new or different proxy functions to be added to the system 100 as new ML models are discovered. The proxy engine 120 can take in either hardware-aware settings (e.g., hardware-aware proxy builder 130 at step 5a in Figure 1) or hardware-agnostic settings (e.g., hardware-agnostic proxy builder 135 at step 5b in Figure 1) to inform performance estimates (e.g., for latency, throughput, and/or power consumption performance metrics).

In some implementations, if hardware platform details are included in the inputs 105, an upfront set of stage-wise measurements could be taken for the ML operation library 125 operations and then used to update the proxy feedback engine 120. For example, if the user indicates that a particular 7 nanometer (nm) process graphics processing unit (GPU) will be used to operate the ML model, then the manner in which tensor operations are going to be distributed on that GPU device have have better latency, power consumption, and/or throughput metrics that are different than the latency, power consumption, and/or throughput if that same ML model were operated by an 22 nm process central processing unit (CPU). Here, the hardware-aware proxy builder 130 may run a benchmark on the indicated hardware devices/platform, which can be used in conjunction with one or more proxy functions to better approximate the overall performance of the ML model.

Additionally, different proxy functions may be applied to different AI/ML tasks and/or for evaluating different performance metrics. For example, Jacobian covariance could be used to evaluate an ML model's Top-1 accuracy (whether the model answer with the highest probability is the expected answer) and apply channel pruning to evaluate the ML model's Top-5 accuracy (e.g., whether any of the ML model's five highest probability answers match the expected answer). Furthermore, any combination of multiple proxy functions (such as those mentioned herein) may be used to provide predictions of different performance metrics. The combination of proxy functions can be accomplished using the weighted average of proxy scores provided by each proxy function, or using ensemble averaging and/or ensemble learning.

In some implementations, the user may select the specific proxy function(s) to be used to predict the ML model's performance metrics. Additionally or alternatively, the SSL mechanism can be used to identify the optimal proxy function(s) to be used for a particular AI/ML task and the other inputs 105.

### 1.2. PERFORMANCE METRICS

The performance metrics that will be predicted may be based on the particular AI/ML task and the other inputs 105. The performance metrics may include model-based metrics and platform-based metrics. The model-based metrics are metrics related to the performance of the model itself and/or without considering the underlying hardware platform. The platform-based metrics are metrics related to the performance of the underlying hardware platform when operating the ML model.

The model-based metrics may be based on the particular type of AI/ML model and/or the AI/ML domain. For example, regression-related metrics may be predicted for regression-based ML models. Examples of regression-related metrics include error value, mean error, mean absolute error (MAE), mean reciprocal rank (MRR), mean squared error (MSE), root MSE (RMSE), correlation coefficient (R), coefficient of determination (R²), Golbraikh and Tropsha criterion, and/or other like regression-related metrics such as those discussed in Naser et al., "Insights into Performance Fitness and Error Metrics for Machine Learning", arXiv:2006.00887v1 (17 May 2020) ("[Naser]"), which is hereby incorporated by reference in its entirety.

In another example, correlation-related metrics may be predicted for correlation-related metrics Examples of correlation-related metrics include accuracy, precision (also referred to as positive predictive value (PPV)), mean average precision (mAP), negative predictive value (NPV), recall (also referred to as true positive rate (TPR) or sensitivity), specificity (also referred to as true negative rate (TNR) or selectivity), false positive rate, false negative rate, F score (e.g., Fi score, F₂ score, F_{β} score, etc.), Matthews Correlation Coefficient (MCC), markedness, receiver operating characteristic (ROC), area under the ROC curve (AUC), distance score, and/or other like correlation-related metrics such as those discussed in [Naser].

Additional or alternative model-based metrics may also be predicted such as, for example, cumulative gain (CG), discounted CG (DCG), normalized DCG (NDCG), signal-to-noise ratio (SNR), peak SNR (PSNR), structural similarity (SSIM), Intersection over Union (IoU), perplexity, bilingual evaluation understudy (BLEU) score, inception score, Wasserstein metric, Fréchet inception distance (FID), string metric, edit distance, Levenshtein distance, Damerau-Levenshtein distance, number of evaluation instances (e.g., iterations, epochs, or episodes), learning rate (e.g., the speed at which the algorithm reaches (converges to) optimal weights), learning rate decay (or weight decay), number of computations, and/or other like performance metrics related to the performance of the ML model.

Examples of the platform-based metrics include latency, response time, throughput (e.g., rate of processing work of a processor or platform/system), availability and/or reliability, power consumption (e.g., performance per Watt, etc.), transistor count, execution time (e.g., amount of time to obtain a prediction, inference, etc.), memory footprint, memory utilization, processor utilization, processor time, number of computations, instructions per second (IPS), floating point operations per second (FLOPS), and/or other like performance metrics related to the performance of the ML model and/or the underlying hardware platform to be used to operate the ML model. Additionally or alternatively, the platform-based metrics may be further classified into hardware-agnostic and hardware-aware metrics. For example, hardware-agnostic metrics may include the number of computations, parameter count, number of multiply accumulate (MAC) operations, and the like, whereas hardware-aware metrics may include memory footprint, memory utilization, processor utilization, processor time, latency, throughput, and the like.

Additionally or alternatively, proxy metrics (e.g., a metric or attribute used as a stand-in or substitute for another metric or attribute) can be used for predicting the ML model performance. For any of the aforementioned performance metrics, the total, mean, and/or some other distribution of such metrics may be predicted and/or measured using any suitable data collection and/or measurement mechanism(s).

### 1.3. SEMI-SUPERVISED LEARNING (SSL) MECHANISM

As mentioned previously, an SSL mechanism is used to improve model-to-model rankings and allows for the mapping of rankings/scores back to actual metrics (e.g. accuracy, latency, power consumption, etc.). Unlike traditional supervised machine learning techniques that require labeled data for training, SSL works on a combination of minimal labeled data and a large amount of unlabeled data. SSL is halfway between supervised and unsupervised learning, where the SSL mechanism is provided with an (unlabeled) test dataset and a (labeled) training dataset, but not necessarily for all examples. SSL mechanisms include inductive learning and transductive learning techniques. Inductive learning techniques output a prediction function that is defined on an entire space *X*, whereas transductive learning techniques perform predictions only for the test points in the test dataset.

In a first (inductive) implementation, the SSL mechanism includes a wrapper method, which involves training one or more predictor models (also referred to as "predictors") using a labeled dataset. This may involve training the predictors to map actual performance metrics to corresponding ML models (or components or aspects of the corresponding ML models). The resulting predictions are then used on unlabeled data to generate additional labeled dataset (referred to as "pseudo-labeled data" or the like). The predictor(s) can then be re-trained on the pseudo-labeled data to improve the overall accuracy of the predictor(s). The wrapper method may be a self-training wrapper method, a co-training wrapper method, or a boosting wrapper method as discuseed in van Engelen et al., "A survey on semi-supervised learning", Machine Learning, vol. 109, no. 2, pp. 373-440 (Feb. 2020) ("[vanEngelen]"), which is hereby incorporated by reference in its entirety.

In a second (inductive) implementation, the SSL mechanism includes an unsupervised pre-processing method, which uses unlabeled and labeled data in different stages. An unsupervised stage comprises either the automated extraction or transformation of sample features from the unlabeled data (feature extraction), the unsupervised clustering of the data (cluster-then-label), or the initialization of the parameters of the learning procedure (pre-training). Unlike the first implementation, in the second implementation the supervised predictor is only provided with the originally labeled data. Additional aspects of these unsupervised pre-processing methods are discussed in more detail in [vanEngelen].

In a third (transductive) implementation, the SSL mechanism includes a graph based semi-supervised method wherein a graph is defined over all labeled and unlabeled data points and the pair-wise similarities are encoded with weighted edges. An objective function is used to ensure that, for labeled data points, the predictions match the labels and points that are similar (defined in the constructed graph) have similar predictions. An example of this implementation includes graph convolutional networks (GCNs) such as those discussed in Kipf et al., "Semi-Supervised Classification with Graph Convolutional Networks", arXiv:1609.02907v4 (22 Feb. 2017) ("[Kipf]"), which is hereby incorporated by reference in its entirety.

Additionally or alternatively to the aforementioned implementations, the SSL mechanisms can be implemented using other SSL methods such as those discussed in [vanEngelen] and/or Chapelle et al. (ed.), "Semi-Supervised Learning", The MIT Press, Cambridge, Massachusetts, London, England (2006) ("[Chapelle]"), which is hereby incorporated by reference in its entirety, for example, generative methods, discriminative methods, intrinsically semi-supervised methods, scalable transductive learning methods, Transductive Support Vector Machines (TSVMs), and/or the like.

Figure 2 shows an example of the SSL mechanism 200 that is applied to map and improve the original proxy scores. The SSL mechanism 200 starts by obtaining proxy scores for various ML models from proxy feedback engine 120, and ranking the ML models according to their proxy scores in graph 201.

Graph 201 (also referred to as "proxy score space 201") shows model proxy scores/rankings based on accuracy proxy scores versus latency proxy scores produced by the proxy feedback engine 120. The nodes 210 in graph 201 may represent individual ML models and/or their proxy scores (note that not all nodes 210 are labeled in Figure 2 for the sake of clarity). For plotting/ranking the ML models, the nodes 210 may be data structures that include an accuracy proxy score component and a latency proxy score component. Although Figure 2 shows graph 201 as being a 2D graph, in other implementations, the graph 201 may have more dimensions than are shown, where each dimension represents a different proxy score metric. For example, a 3D graph 201 could include an accuracy proxy score axis, a latency proxy score axis, and a power consumption proxy score axis, and each node 210 could include accuracy proxy score, latency proxy score, and power consumption proxy score components. As alluded to previously, each proxy score may be produced using the same or different proxy functions.

From graph 201, a subset of the nodes 210 (or their corresponding ML models) are selected for the training and validation 145. As mentioned previously, the selection of models for training and validation 145 could be random, user directed, or model-distance directed. In the example of Figure 2, the filled-in (i.e., black) nodes 210 in graph 201 correspond to models that are selected for the training and validation 145, and the non-filled-in (i.e., white) nodes 210 correspond to non-selected models.

Next, the training and validation is performed on the selected models by the training and validation engine 145. Here, the selected models are fully trained/validated using full training sets, although partial training datasets (training subsets) could be used for training/validation in some implementations. The training and validation engine 145 produces actual objective metric values for the selected models, which in the example of Figure 2 include accuracy and latency metrics. The actual objective metric values for the selected models are used as a subset of labeled data that is then used for training the semi-supervised model 220.

After the training and validation 145, a representation 220 of the full set of proxy scored models is generated. In this example, the SSL mechanism 200 includes the use of a GCN 220 where each model (including the selected models and unselected models from graph 201) is represented by a node in the GCN 220. Additionally, each edge in the GCN 220 is weighted by a model-to-model similarity metric (e.g., computational graph Damerau-Levenshtein distance and/or some other graphing similarity metric(s)).

After training the GCN 220, the learned node/edge embeddings can be used to predict actual objective performance metric values resulting in a far more useable and accurate ML model ranking outputs in graph 203. Graph 203 (also referred to as "performance space 203") shows a set of improved model rankings produced by the GCN 220 after an inference/prediction stage. The nodes 230 in graph 203 may represent the individual ML models and/or their improved ranking/scores (note that not all nodes 230 are labeled in Figure 2 for the sake of clarity). For plotting/ranking the ML models, the nodes 230 may be data structures that include an accuracy component and a latency component. Similar to graph 201, graph 203 may have more dimensions than are shown and the number of dimensions/axes in graph 203 may be the same as the number of dimensions/axes in graph 201, and the nodes 230 may have components corresponding to each axis. In graph 203, the filled-in (black) nodes 230 correspond to the actual values produced from the training/validation 145 (e.g., from the models selected from graph 201), and the non-filled-in (white) nodes 230 are the augmented predicted values from the GCN 220.

The improved rankings/scores from graph 203 are then mapped to the corresponding ML models (and/or aspects thereof), which are then fed back to the proxy feedback engine 120 to produce more accurate proxy scores. These updated/improved mappings are more accurate than the previously existing proxy scores at least with respect to the desired objectives.

In some implementations, each time a model (or set of models) is run through the SSL mechanism 200, the distance between different nodes 230 can be measured and/or the relation of individual nodes 230 to proxy scores can be measured for the different proxy functions. After a number of passes through the SSL mechanism 200, for each AI/ML task/domain, the different proxy functions (and/or combinations or proxy functions) can be ranked based on these measures (e.g., by the model analysis engine 140). In this way, the proxy function rankings can then be used for later iterations to produce better proxy scores.

Furthermore, as more ML models are designed/engineered using the system 100 for different AI/ML tasks and domains, more proxy scores will be produced, which are then fed back into the SSL mechanism 200 thereby producing even more improved proxy functions and/or improved proxy scoring mechanisms (in terms of speed, accuracy, and reduced resource consumption). In some cases, the SSL mechanism 200 may produce proxy function(s) that is/are faster, more accurate, and/or uses fewer resources beyond those that currently exist, and potentially beyond what the human mind could conceive.

### 1.4. INTERACTIVE USE CASE EXAMPLE

An example use case for system 100 includes an interactive educational application to teach AI/ML concepts, which is described with respect to Figures 1-2. In this use case, the MDE app 110b may be designed as an interactive command-line or GUI that is accessible by an end-user (e.g., using a client device 101). The user starts by defining a problem AI/ML task, AI/ML domain, and load an associated dataset (e.g., inputs 105). For example, the user could start with a simple image classification task and use the Modified National Institute of Standards and Technology (MNIST) database as the dataset. Then the user would be presented with suggested starting point (initial) ML model (e.g., a DNN or the like) based on the AI/ML task and/or AI/ML domain, and would be shown a list of available ML operations (e.g., tensor operations, convolution operations, activation functions, etc.) that the system 100 supports (e.g., operations that the proxy function(s) work with).

Next, the user would interactively begin building their ML model using components from the (tensor) library of supported operations 125. For example, the MDE 110a may provide graphical objects based on the available/supported operations 125, and the user can begin dragging and dropping and/or connecting graphical tensor components from the library 125. As the ML model is modified, the system 100 would iteratively give feedback to the user on how each particular iteration of the ML model would perform against certain metrics (e.g., accuracy, latency, FLOPs, etc.). For example, in response to individual interactions with the MDE 110a, the the MDE 110a will provide performance feedback, which can continue to iterate until the user is satisfied with the model.

A background process (e.g., model analysis engine 140) would rank all tested models, provide statistics, and suggest models for the SSL mechanism 200. Following the semi-supervised feedback stage 147, the full set of proxy scores would be better ranked and mapped to actual performance metrics. If the user found a model they like as a "final model", the system would fully train 145 and export this model 150.

### 2. ARTIFICIAL INTELLIGENCE AND MACHINE LEARNING ASPECTS

Machine learning (ML) involves programming computing systems to optimize a performance criterion using example (training) data and/or past experience. ML refers to the use and development of computer systems that are able to learn and adapt without following explicit instructions, by using algorithms and statistical models to analyze and draw inferences from patterns in data. ML involves using algorithms to perform specific task(s) without using explicit instructions to perform the specific task(s), but instead relying on learnt patterns and/or inferences. ML uses statistics to build mathematical model(s) (also referred to as "ML models" or simply "models") in order to make predictions or decisions based on sample data (e.g., training data). The model is defined to have a set of parameters, and learning is the execution of a computer program to optimize the parameters of the model using the training data or past experience. The trained model may be a predictive model that makes predictions based on an input dataset, a descriptive model that gains knowledge from an input dataset, or both predictive and descriptive. Once the model is learned (trained), it can be used to make inferences (e.g., predictions).

ML algorithms perform a training process on a training dataset to estimate an underlying ML model. An ML algorithm is a computer program that learns from experience with respect to some task(s) and some performance measure(s)/metric(s), and an ML model is an object or data structure created after an ML algorithm is trained with training data. In other words, the term "ML model" or "model" may describe the output of an ML algorithm that is trained with training data. After training, an ML model may be used to make predictions on new datasets. Additionally, separately trained AI/ML models can be chained together in a AI/ML pipeline during inference or prediction generation. Although the term "ML algorithm" refers to different concepts than the term "ML model," these terms may be used interchangeably for the purposes of the present disclosure. Any of the ML techniques discussed herein may be utilized, in whole or in part, and variants and/or combinations thereof, for any of the example embodiments discussed herein.

ML may require, among other things, obtaining and cleaning a dataset, performing feature selection, selecting an ML algorithm, dividing the dataset into training data and testing data, training a model (e.g., using the selected ML algorithm), testing the model, optimizing or tuning the model, and determining metrics for the model. Some of these tasks may be optional or omitted depending on the use case and/or the implementation used.

ML algorithms accept model parameters (or simply "parameters") and/or hyperparameters that can be used to control certain properties of the training process and the resulting model. Model parameters are parameters, values, characteristics, and/or properties that are learnt during training. Additionally or alternatively, model parameters may include configuration variables that are internal to the model and whose value can be estimated from the given data. Model parameters are usually required by a model when making predictions, and their values define the skill of the model on a particular problem. Examples of such model parameters include weights (e.g., in a NN); constraints; support vectors in a support vector machine (SVM); coefficients in a linear regression and/or logistic regression; word frequency, sentence length, noun or verb distribution per sentence, the number of specific character n-grams per word, lexical diversity, etc., for natural language processing (NLP) and/or natural language understanding (NLU); and/or the like.

Hyperparameters at least in some embodiments refers to characteristics, properties, and/or parameters for an ML process that cannot be learnt during a training process. Hyperparameter are usually set before training takes place, and may be used in processes to help estimate model parameters. Examples of hyperparameters include model size (e.g., in terms of memory space, bytes, number of layers, etc.); training data shuffling (e.g., whether to do so and by how much); number of evaluation instances, iterations, epochs (e.g., a number of iterations or passes over the training data), or episodes; learning rate (e.g., the speed at which the algorithm reaches (converges to) optimal weights); learning rate decay (or weight decay); number of hidden layers; size of individual hidden layers; weight initialization scheme; dropout and gradient clipping thresholds; the C value and sigma value for SVMs; the k in k-nearest neighbors; vector size; word vector size for NLP and NLU; and/or the like.

ML techniques generally fall into the following main types of learning problem categories: supervised learning, unsupervised learning, and reinforcement learning. Supervised learning is an ML task that aims to learn a mapping function from the input to the output, given a labeled data set. Supervised learning algorithms build models from a set of data that contains both the inputs and the desired outputs. For example, supervised learning may involve learning a function (model) that maps an input to an output based on example input-output pairs or some other form of labeled training data including a set of training examples. Each input-output pair includes an input object (e.g., a vector) and a desired output object or value (referred to as a "supervisory signal"). Supervised learning can be grouped into classification algorithms, regression algorithms, and instance-based algorithms.

Unsupervised learning is an ML task that aims to learn a function to describe a hidden structure from unlabeled data. Unsupervised learning algorithms build models from a set of data that contains only inputs and no desired output labels. Some examples of unsupervised learning include K-means clustering, principal component analysis (PCA), and topic modeling, among many others.

Semi-supervised learning (SSL) algorithms develop ML models from incomplete training data, where a portion of the sample input does not include labels. SSL can include transductive learning (e.g., inferring the correct labels for a set of unlabeled data) or inductive learning (e.g., inferring a correct mapping from a first value to a second value). Examples of unsupervised learning include topic modeling, transductive SVMs (TSVMs), generative modeling, self-training, co-training, and/or the like.

Reinforcement learning (RL) is a goal-oriented learning technique based on interaction with environment. In RL, an agent aims to optimize a long-term objective by interacting with the environment based on a trial and error process. Examples of RL algorithms include Markov decision process, Markov chain, deep RL (DRL), Q-learning, deep Q-learning, multi-armed bandit problems.

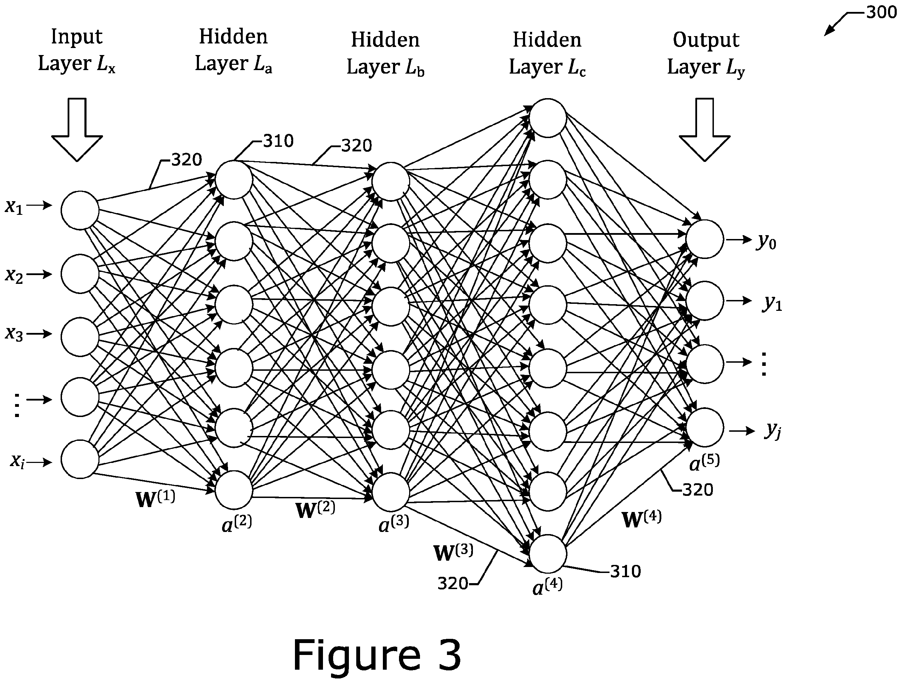

Some implementations of AI and ML use data and neural networks (NNs) in a way that mimics the working of a biological brain. An example of such an implementation is shown by Figure 3.

Figure 3 illustrates an example NN 300, which may be suitable for use by one or more of the computing systems (or subsystems) of the various implementations discussed herein, implemented in part by a hardware accelerator, and/or the like. The NN 300 may be deep neural network (DNN) used as an artificial brain of a compute node or network of compute nodes to handle very large and complicated observation spaces. Additionally or alternatively, the NN 300 can be some other type of topology (or combination of topologies), such as a convolution NN (CNN), deep CNN (DCN), recurrent NN (RNN), Long Short Term Memory (LSTM) network, a Deconvolutional NN (DNN), gated recurrent unit (GRU), deep belief NN, a feed forward NN (FFN), a deep FNN (DFF), deep stacking network, Markov chain, perception NN, Bayesian Network (BN) or Bayesian NN (BNN), Dynamic BN (DBN), Linear Dynamical System (LDS), Switching LDS (SLDS), Optical NNs (ONNs), an NN for reinforcement learning (RL) and/or deep RL (DRL), and/or the like. NNs are usually used for supervised learning, but can be used for unsupervised learning and/or RL.

The NN 300 may encompass a variety of ML techniques where a collection of connected artificial neurons 310 that (loosely) model neurons in a biological brain that transmit signals to other neurons/nodes 310. The neurons 310 may also be referred to as nodes 310, processing elements (PEs) 310, or the like. The connections 320 (or edges 320) between the nodes 310 are (loosely) modeled on synapses of a biological brain and convey the signals between nodes 310. Note that not all neurons 310 and edges 320 are labeled in Figure 3 for the sake of clarity.

Each neuron 310 has one or more inputs and produces an output, which can be sent to one or more other neurons 310 (the inputs and outputs may be referred to as "signals"). Inputs to the neurons 310 of the input layer *Lₓ* can be feature values of a sample of external data (e.g., input variables *xᵢ*). The input variables *xᵢ* can be set as a vector containing relevant data (e.g., observations, ML features, etc.). The inputs to hidden units 310 of the hidden layers *Lₐ, L_{b},* and *L_{c}* may be based on the outputs of other neurons 310. The outputs of the final output neurons 310 of the ouput layer *L_{y}* (e.g., output variables *yⱼ*) include predictions, inferences, and/or accomplish a desired/configured task. The output variables *yⱼ* may be in the form of determinations, inferences, predictions, and/or assessments. Additionally or alternatively, the output variables *yⱼ* can be set as a vector containing the relevant data (e.g., determinations, inferences, predictions, assessments, and/or the like).

In the context of ML, an "ML feature" (or simply "feature") is an individual measureable property or characteristic of a phenomenon being observed. Features are usually represented using numbers/numerals (e.g., integers), strings, variables, ordinals, real-values, categories, and/or the like. Additionally or alternatively, ML features are individual variables, which may be independent variables, based on observable phenomenon that can be quantified and recorded. ML models use one or more features to make predictions or inferences. In some implementations, new features can be derived from old features. A set of features may be referred to as a "feature vector." A vector is a tuple of one or more values called scalars, and a feature vector may include a tuple of one or more features (e.g., a data structure that contains known attributes of an instance). The vector space associated with these vectors is often called a "vector space" or a "feature space."

Neurons 310 may have a threshold such that a signal is sent only if the aggregate signal crosses that threshold. A node 310 may include an activation function, which defines the output of that node 310 given an input or set of inputs. Additionally or alternatively, a node 310 may include a propagation function that computes the input to a neuron 310 from the outputs of its predecessor neurons 310 and their connections 320 as a weighted sum. A bias term can also be added to the result of the propagation function.

The NN 300 also includes connections 320, some of which provide the output of at least one neuron 310 as an input to at least another neuron 310. Each connection 320 may be assigned a weight that represents its relative importance. The weights may also be adjusted as learning proceeds. The weight increases or decreases the strength of the signal at a connection 320.

The neurons 310 can be aggregated or grouped into one or more layers *L* where different layers *L* may perform different transformations on their inputs. In Figure 3, the NN 300 comprises an input layer *Lₓ,* one or more hidden layers *Lₐ, L_{b},* and *L_{c},* and an output layer *L_{y}* (where *a, b, c, x,* and *y* may be numbers),where each layer *L* comprises one or more neurons 310. Signals travel from the first layer (e.g., the input layer *L*₁), to the last layer (e.g., the output layer *L_{y}),* possibly after traversing the hidden layers *Lₐ, L_{b},* and *L*_{c} multiple times. In Figure 3, the input layer *Lₐ* receives data of input variables *xᵢ* (where *i* = 1, ..., *p*, where *p* is a number). Hidden layers *Lₐ, L_{b}, and L_{c}* processes the inputs *xᵢ*, and eventually, output layer *L_{y}* provides output variables *yⱼ* (where *j* = 1, ..., *p*', where *p*' is a number that is the same or different than *p*). In the example of Figure 3, for simplicity of illustration, there are only three hidden layers *Lₐ, L_{b},* and *L_{c}* in the ANN 300, however, the ANN 300 may include many more (or fewer) hidden layers *Lₐ, L_{b},* and *L_{c}* than are shown.

### 3. EXAMPLE HARDWARE AND SOFTWARE CONFIGURATIONS AND ARRANGEMENTS

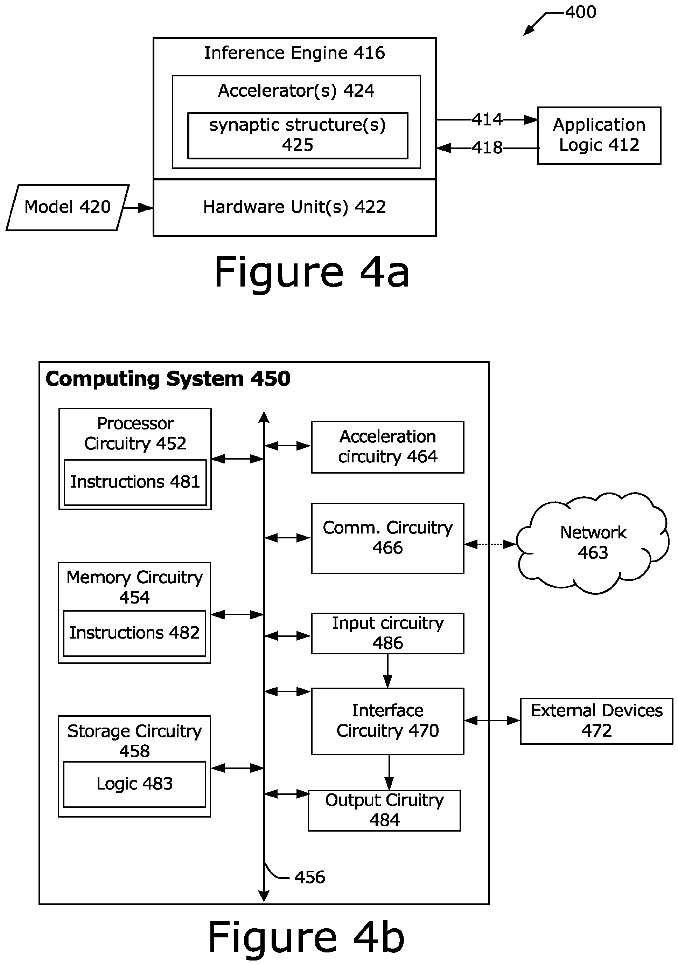

Figure 4a is an example accelerator architecture 400 for according to various embodiments. The accelerator architecture 400 provides neural network (NN) functionality to application logic 412, and as such, may be referred to as a NN accelerator architecture 400, DNN accelerator architecture 400, and/or the like.

The application logic 412 may include application software and/or hardware components used to perform specification functions. The application logic 412 forwards data 414 to an inference engine 416. The inference engine 416 is a runtime element that delivers a unified application programming interface (API) that integrates a ANN (e.g., DNN(s) or the like) inference with the application logic 412 to provide a result 418 (or output) to the application logic 412.

To provide the inference, the inference engine 416 uses a model 420 that controls how the DNN inference is made on the data 414 to generate the result 418. Specifically, the model 420 includes a topology of layers of a NN. The topology includes an input layer that receives the data 414, an output layer that outputs the result 418, and one or more hidden layers between the input and output layers that provide processing between the data 14 and the result 418. The topology may be stored in a suitable information object, such as an extensible markup language (XML), JavaScript Object Notation (JSON), and/or other suitable data structure, file, and/or the like. The model 420 may also include weights and/or biases for results for any of the layers while processing the data 414 in the inference using the DNN

The inference engine 416 may be implemented using and/or connected to hardware unit(s) 422. The inference engine 416 at least in some embodiments is an element that applies logical rules to a knowledge base to deduce new information. The knowledge base at least in some embodiments is any technology used to store complex structured and/or unstructured information used by a computing system (e.g., computing system 450 of Figure 4). The knowledge base may include storage devices, repositories, database management systems, and/or other like elements.

Furthermore, the inference engine 416 includes one or more accelerators 424 that provide hardware acceleration for the DNN inference using one or more hardware units 422. The accelerator(s) 424 are software and/or hardware element(s) specifically tailored/designed as hardware acceleration for AI/ML applications and/or AI/ML tasks. The one or more accelerators 424 may include one or more processing element (PE) arrays and/or a multiply-and-accumulate (MAC) architecture in the form of a plurality of synaptic structures 425. The accelerator(s) 424may correspond to the acceleration circuitry 464 of Figure 4 described infra.

The hardware unit(s) 422 may include one or more processors and/or one or more programmable devices. As examples, the processors may include central processing units (CPUs), graphics processing units (GPUs), dedicated AI accelerator Application Specific Integrated Circuits (ASICs), vision processing units (VPUs), tensor processing units (TPUs) and/or Edge TPUs, Neural Compute Engine (NCE), Pixel Visual Core (PVC), photonic integrated circuit (PIC) or optical/photonic computing device, and/or the like. The programmable devices may include, for example, logic arrays, programmable logic devices (PLDs) such as complex PLDs (CPLDs), field-programmable gate arrays (FPGAs), programmable ASICs, programmable System-on-Chip (SoC), and the like. The processor(s) and/or programmable devices may correspond to processor circuitry 452 and/or acceleration circuitry 464 of Figure 4.

Figure 4b illustrates an example of components that may be present in a computing system 450 for implementing the techniques (e.g., operations, processes, methods, and methodologies) described herein. The computing system 450 provides a closer view of the respective components of node 400 when implemented as or as part of a computing device (e.g., as a mobile device, a base station, server computer, gateway, appliance, etc.). The computing system 450 may include any combinations of the hardware or logical components referenced herein, and it may include or couple with any device usable with an edge communication network or a combination of such networks. The components may be implemented as ICs, portions thereof, discrete electronic devices, or other modules, instruction sets, programmable logic or algorithms, hardware, hardware accelerators, software, firmware, or a combination thereof adapted in the computing system 450, or as components otherwise incorporated within a chassis of a larger system. For one embodiment, at least one processor 452 may be packaged together with computational logic 482 and configured to practice aspects of various example embodiments described herein to form a System in Package (SiP) or a System on Chip (SoC).

The system 450 includes processor circuitry in the form of one or more processors 452. The processor circuitry 452 includes circuitry such as, but not limited to one or more processor cores and one or more of cache memory, low drop-out voltage regulators (LDOs), interrupt controllers, serial interfaces such as SPI, I2C or universal programmable serial interface circuit, real time clock (RTC), timer-counters including interval and watchdog timers, general purpose I/O, memory card controllers such as secure digital/multi-media card (SD/MMC) or similar, interfaces, mobile industry processor interface (MIPI) interfaces and Joint Test Access Group (JTAG) test access ports. In some implementations, the processor circuitry 452 may include one or more hardware accelerators (e.g., same or similar to acceleration circuitry 464), which may be microprocessors, programmable processing devices (e.g., FPGA, ASIC, etc.), or the like. The one or more accelerators may include, for example, computer vision and/or deep learning accelerators. In some implementations, the processor circuitry 452 may include on-chip memory circuitry, which may include any suitable volatile and/or non-volatile memory, such as DRAM, SRAM, EPROM, EEPROM, Flash memory, solid-state memory, and/or any other type of memory device technology, such as those discussed herein

The processor circuitry 452 may include, for example, one or more processor cores (CPUs), application processors, GPUs, RISC processors, Acorn RISC Machine (ARM) processors, CISC processors, one or more DSPs, one or more FPGAs, one or more PLDs, one or more ASICs, one or more baseband processors, one or more radio-frequency integrated circuits (RFIC), one or more microprocessors or controllers, a multi-core processor, a multithreaded processor, an ultra-low voltage processor, an embedded processor, or any other known processing elements, or any suitable combination thereof. The processors (or cores) 452 may be coupled with or may include memory/storage and may be configured to execute instructions 481 stored in the memory/storage to enable various applications or operating systems to run on the platform 450. The processors (or cores) 452 is configured to operate application software to provide a specific service to a user of the platform 450. In some embodiments, the processor(s) 452 may be a special-purpose processor(s)/controller(s) configured (or configurable) to operate according to the various embodiments herein.

As examples, the processor(s) 452 may include an Intel^{®} Architecture Core^{™} based processor such as an i3, an i5, an i7, an i9 based processor; an Intel^{®} microcontroller-based processor such as a Quark^{™}, an Atom^{™}, or other MCU-based processor; Pentium^{®} processor(s), Xeon^{®} processor(s), or another such processor available from Intel^{®} Corporation, Santa Clara, California. However, any number other processors may be used, such as one or more of Advanced Micro Devices (AMD) Zen^{®} Architecture such as Ryzen^{®} or EPYC^{®} processor(s), Accelerated Processing Units (APUs), MxGPUs, Epyc^{®} processor(s), or the like; A5-A12 and/or S1-S4 processor(s) from Apple^{®} Inc., Snapdragon^{™} or Centriq^{™} processor(s) from Qualcomm^{®} Technologies, Inc., Texas Instruments, Inc.^{®} Open Multimedia Applications Platform (OMAP)^{™} processor(s); a MIPS-based design from MIPS Technologies, Inc. such as MIPS Warrior M-class, Warrior I-class, and Warrior P-class processors; an ARM-based design licensed from ARM Holdings, Ltd., such as the ARM Cortex-A, Cortex-R, and Cortex-M family of processors; the ThunderX2^{®} provided by Cavium^{™}, Inc.; or the like. In some implementations, the processor(s) 452 may be a part of a system on a chip (SoC), System-in-Package (SiP), a multi-chip package (MCP), and/or the like, in which the processor(s) 452 and other components are formed into a single integrated circuit, or a single package, such as the Edison^{™} or Galileo^{™} SoC boards from Intel^{®} Corporation. Other examples of the processor(s) 452 are mentioned elsewhere in the present disclosure.

The system 450 may include or be coupled to acceleration circuitry 464, which may be embodied by one or more AI/ML accelerators, a neural compute stick, neuromorphic hardware, an FPGA, an arrangement of GPUs, one or more SoCs (including programmable SoCs), one or more CPUs, one or more digital signal processors, dedicated ASICs (including programmable ASICs), PLDs such as complex (CPLDs) or high complexity PLDs (HCPLDs), and/or other forms of specialized processors or circuitry designed to accomplish one or more specialized tasks. These tasks may include AI/ML processing (e.g., including training, inferencing, and classification operations), visual data processing, network data processing, object detection, rule analysis, or the like. In FPGA-based implementations, the acceleration circuitry 464 may comprise logic blocks or logic fabric and other interconnected resources that may be programmed (configured) to perform various functions, such as the procedures, methods, functions, etc. of the various embodiments discussed herein. In such implementations, the acceleration circuitry 464 may also include memory cells (e.g., EPROM, EEPROM, flash memory, static memory (e.g., SRAM, anti-fuses, etc.) used to store logic blocks, logic fabric, data, etc. in LUTs and the like.

In some implementations, the processor circuitry 452 and/or acceleration circuitry 464 may include hardware elements specifically tailored for machine learning functionality, such as for operating performing ANN operations such as those discussed herein. In these implementations, the processor circuitry 452 and/or acceleration circuitry 464 may be, or may include, an AI engine chip that can run many different kinds of AI instruction sets once loaded with the appropriate weightings and training code. Additionally or alternatively, the processor circuitry 452 and/or acceleration circuitry 464 may be, or may include, AI accelerator(s), which may be one or more of the aforementioned hardware accelerators designed for hardware acceleration of AI applications. As examples, these processor(s) or accelerators may be a cluster of artificial intelligence (AI) GPUs, tensor processing units (TPUs) developed by Google^{®} Inc., Real AI Processors (RAPs^{™}) provided by AlphaICs^{®}, Nervana^{™} Neural Network Processors (NNPs) provided by Intel^{®} Corp., Intel^{®} Movidius^{™} Myriad^{™} X Vision Processing Unit (VPU), NVIDIA^{®} PX^{™} based GPUs, the NM500 chip provided by General Vision^{®}, Hardware 3 provided by Tesla^{®}, Inc., an Epiphany^{™} based processor provided by Adapteva^{®}, or the like. In some embodiments, the processor circuitry 452 and/or acceleration circuitry 464 and/or hardware accelerator circuitry may be implemented as AI accelerating co-processor(s), such as the Hexagon 685 DSP provided by Qualcomm^{®}, the PowerVR 2NX Neural Net Accelerator (NNA) provided by Imagination Technologies Limited^{®}, the Neural Engine core within the Apple^{®} A11 or A12 Bionic SoC, the Neural Processing Unit (NPU) within the HiSilicon Kirin 970 provided by Huawei^{®}, and/or the like. In some hardware-based implementations, individual subsystems of system 450 may be operated by the respective AI accelerating co-processor(s), AI GPUs, TPUs, or hardware accelerators (e.g., FPGAs, ASICs, DSPs, SoCs, etc.), etc., that are configured with appropriate logic blocks, bit stream(s), etc. to perform their respective functions.

The system 450 also includes system memory 454. Any number of memory devices may be used to provide for a given amount of system memory. As examples, the memory 454 may be, or include, volatile memory such as random access memory (RAM), static RAM (SRAM), dynamic RAM (DRAM), synchronous DRAM (SDRAM), RAMBUS^{®} Dynamic Random Access Memory (RDRAM^{®}), and/or any other desired type of volatile memory device. Additionally or alternatively, the memory 454 may be, or include, non-volatile memory such as read-only memory (ROM), erasable programmable ROM (EPROM), electrically erasable programmable (EEPROM), flash memory, non-volatile RAM, ferroelectric RAM, phase-change memory (PCM), flash memory, and/or any other desired type of non-volatile memory device. Access to the memory 454 is controlled by a memory controller. The individual memory devices may be of any number of different package types such as single die package (SDP), dual die package (DDP) or quad die package (Q17P). Any number of other memory implementations may be used, such as dual inline memory modules (DIMMs) of different varieties including but not limited to microDIMMs or MiniDIMMs.

Storage circuitry 458 provides persistent storage of information such as data, applications, operating systems and so forth. In an example, the storage 458 may be implemented via a solid-state disk drive (SSDD) and/or high-speed electrically erasable memory (commonly referred to as "flash memory"). Other devices that may be used for the storage 458 include flash memory cards, such as SD cards, microSD cards, XD picture cards, and the like, and USB flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, phase change RAM (PRAM), resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a Domain Wall (DW) and Spin Orbit Transfer (SOT) based device, a thyristor based memory device, a hard disk drive (HDD), micro HDD, of a combination thereof, and/or any other memory. The memory circuitry 454 and/or storage circuitry 458 may also incorporate three-dimensional (3D) cross-point (XPOINT) memories from Intel^{®} and Micron^{®}.

The memory circuitry 454 and/or storage circuitry 458 is/are configured to store computational logic 483 in the form of software, firmware, microcode, or hardware-level instructions to implement the techniques described herein. The computational logic 483 may be employed to store working copies and/or permanent copies of programming instructions, or data to create the programming instructions, for the operation of various components of system 400 (e.g., drivers, libraries, application programming interfaces (APIs), etc.), an operating system of system 400, one or more applications, and/or for carrying out the embodiments discussed herein. The computational logic 483 may be stored or loaded into memory circuitry 454 as instructions 482, or data to create the instructions 482, which are then accessed for execution by the processor circuitry 452 to carry out the functions described herein. The processor circuitry 452 and/or the acceleration circuitry 464 accesses the memory circuitry 454 and/or the storage circuitry 458 over the IX 456. The instructions 482 direct the processor circuitry 452 to perform a specific sequence or flow of actions, for example, as described with respect to flowchart(s) and block diagram(s) of operations and functionality depicted previously. The various elements may be implemented by assembler instructions supported by processor circuitry 452 or high-level languages that may be compiled into instructions 481, or data to create the instructions 481, to be executed by the processor circuitry 452. The permanent copy of the programming instructions may be placed into persistent storage devices of storage circuitry 458 in the factory or in the field through, for example, a distribution medium (not shown), through a communication interface (e.g., from a distribution server (not shown)), over-the-air (OTA), or any combination thereof.

The IX 456 couples the processor 452 to communication circuitry 466 for communications with other devices, such as a remote server (not shown) and the like. The communication circuitry 466 is a hardware element, or collection of hardware elements, used to communicate over one or more networks 463 and/or with other devices. In one example, communication circuitry 466 is, or includes, transceiver circuitry configured to enable wireless communications using any number of frequencies and protocols such as, for example, the Institute of Electrical and Electronics Engineers (IEEE) 802.11 (and/or variants thereof), IEEE 802.15.4, Bluetooth^{®} and/or Bluetooth^{®} low energy (BLE), ZigBee^{®}, LoRaWAN^{™} (Long Range Wide Area Network), a cellular protocol such as 3GPP LTE and/or Fifth Generation (5G)/New Radio (NR), and/or the like. Additionally or alternatively, communication circuitry 466 is, or includes, one or more network interface controllers (NICs) to enable wired communication using, for example, an Ethernet connection, Controller Area Network (CAN), Local Interconnect Network (LIN), DeviceNet, ControlNet, Data Highway+, or PROFINET, among many others. In some embodiments, the communication circuitry 466 may include or otherwise be coupled with the an accelerator 424 including one or more synaptic devices/structures 425, etc., as described previously.

The IX 456 also couples the processor 452 to interface circuitry 470 that is used to connect system 450 with one or more external devices 472. The external devices 472 may include, for example, sensors, actuators, positioning circuitry (e.g., global navigation satellite system (GNSS)/Global Positioning System (GPS) circuitry), client devices, servers, network appliances (e.g., switches, hubs, routers, etc.), integrated photonics devices (e.g., optical neural network (ONN) integrated circuit (IC) and/or the like), and/or other like devices.

In some optional examples, various input/output (I/O) devices may be present within or connected to, the system 450, which are referred to as input circuitry 486 and output circuitry 484 in Figure 4. The input circuitry 486 and output circuitry 484 include one or more user interfaces designed to enable user interaction with the platform 450 and/or peripheral component interfaces designed to enable peripheral component interaction with the platform 450. Input circuitry 486 may include any physical or virtual means for accepting an input including, inter alia, one or more physical or virtual buttons (e.g., a reset button), a physical keyboard, keypad, mouse, touchpad, touchscreen, microphones, scanner, headset, and/or the like. The output circuitry 484 may be included to show information or otherwise convey information, such as sensor readings, actuator position(s), or other like information. Data and/or graphics may be displayed on one or more user interface components of the output circuitry 484. Output circuitry 484 may include any number and/or combinations of audio or visual display, including, inter alia, one or more simple visual outputs/indicators (e.g., binary status indicators (e.g., light emitting diodes (LEDs)) and multi-character visual outputs, or more complex outputs such as display devices or touchscreens (e.g., Liquid Chrystal Displays (LCD), LED displays, quantum dot displays, projectors, etc.), with the output of characters, graphics, multimedia objects, and the like being generated or produced from the operation of the platform 450. The output circuitry 484 may also include speakers and/or other audio emitting devices, printer(s), and/or the like. Additionally or alternatively, sensor(s) may be used as the input circuitry 484 (e.g., an image capture device, motion capture device, or the like) and one or more actuators may be used as the output device circuitry 484 (e.g., an actuator to provide haptic feedback or the like). Peripheral component interfaces may include, but are not limited to, a non-volatile memory port, a USB port, an audio jack, a power supply interface, etc. A display or console hardware, in the context of the present system, may be used to provide output and receive input of an edge computing system; to manage components or services of an edge computing system; identify a state of an edge computing component or service; or to conduct any other number of management or administration functions or service use cases.

The components of the system 450 may communicate over the interconnect (IX) 456. The IX 456 may include any number of technologies, including ISA, extended ISA, I2C, SPI, point-to-point interfaces, power management bus (PMBus), PCI, PCIe, PCIx, Intel^{®} UPI, Intel^{®} Accelerator Link, Intel^{®} CXL, CAPI, OpenCAPI, Intel^{®} QPI, UPI, Intel^{®} OPA IX, RapidIO^{™} system IXs, CCIX, Gen-Z Consortium IXs, a HyperTransport interconnect, NVLink provided by NVIDIA^{®}, a Time-Trigger Protocol (TTP) system, a FlexRay system, PROFIBUS, and/or any number of other IX technologies. The IX 456 may be a proprietary bus, for example, used in a SoC based system.

The number, capability, and/or capacity of the elements of system 450 may vary, depending on whether computing system 450 is used as a stationary computing device (e.g., a server computer in a data center, a workstation, a desktop computer, etc.) or a mobile computing device (e.g., a smartphone, tablet computing device, laptop computer, game console, IoT device, etc.). In various implementations, the computing device system 450 may comprise one or more components of a data center, a desktop computer, a workstation, a laptop, a smartphone, a tablet, a digital camera, a smart appliance, a smart home hub, a network appliance, and/or any other device/system that processes data.

### 4. EXAMPLE IMPLEMENTATIONS

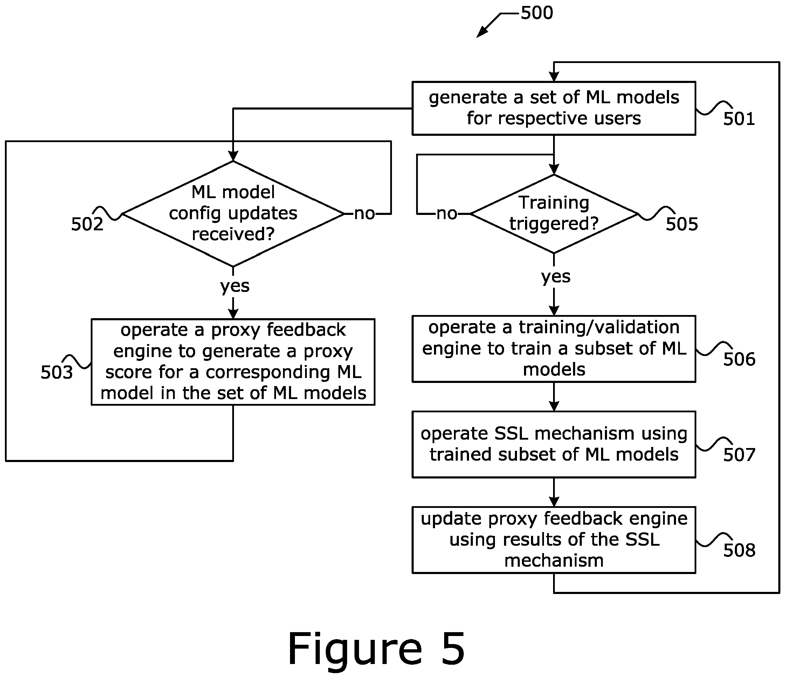

Figure 5 depicts an example process 500 for predicting performance metrics for ML models, which may be performed by an ML model engineering system 100. Process 500 begins at operation 501 where a set of ML models are generated for respective users (e.g., each operating corresponding client devices 101). At operation 502, the system 100 determines whether any ML model configuration (MLMC) updates have been received from any of the users. If not, the system 100 loops back to continue to check for MLMC updates. For each obtained MLMC, at operation 503 the system 100 operates a proxy feedback engine 120 to generate a proxy score for a corresponding MLMC/ML model. The proxy score of the corresponding MLMC/ML model is based on one or more predicted performance metrics for the corresponding MLMC/ML model. Meanwhile, at operation 505 the system 100 determines whether a training trigger has been received (e.g., a user input or a predetermined event/criteria). If not, the system 100 loops back to continue to monitor for the training trigger. If a training trigger is detected, the system 100 at operation 506 operates a training and validation engine 145 to train a subset of ML models from a set of ML models/MLMCs that have proxy scores. The training is performed to obtain one or more actual performance metrics for the ML models in the subset of ML models. At operation 507, the system 100 operates an SSL mechanism to learn relationships between the one or more actual performance metrics and the ML models in the subset of ML models. The "relationships" between the one or more actual performance metrics and the ML models in the subset of ML models may refer to "mappings" between the actual performance metrics and the ML models, "relations" between the actual performance metrics and the ML models, and/or any other correspondence between the actual performance metrics and the ML models, or combinations thereof. At operation 508, the system 100 updates the proxy feedback engine 120 with the learned relationships to generate improved proxy scores for future ML models/MLMCs. After operation 508, the system 100 loops back to operation 501 to continue to generate ML models for various users.

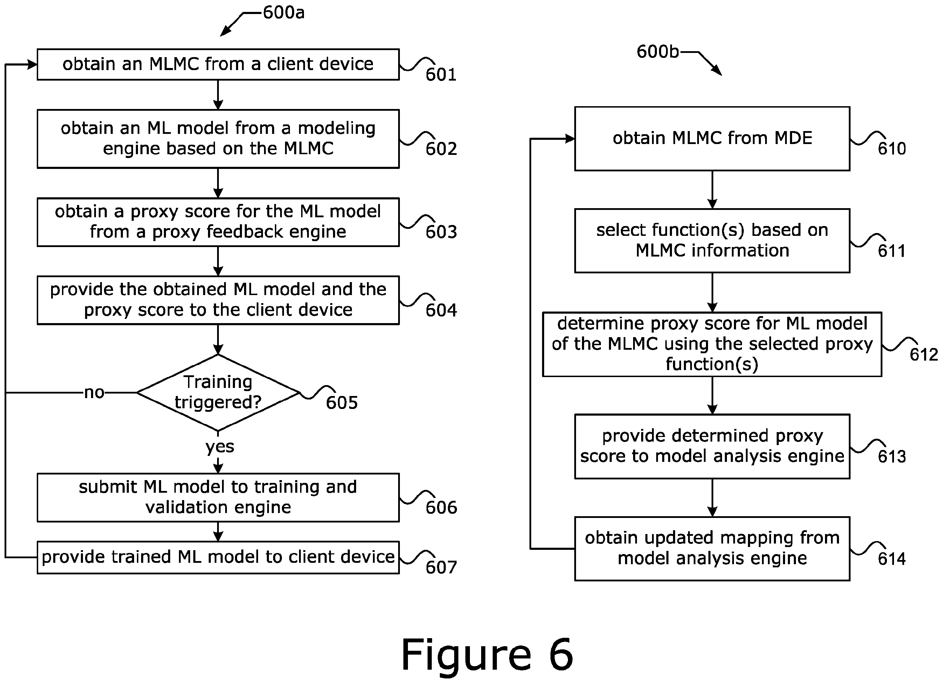

Figure 6 depicts an example process 600a for operating an MDE 110a. Process 600a begins at operation 601 where the MDE 110a obtains an MLMC as ML inputs 105 from a client device 101 (or a client-side MDE app 110b). The ML inputs may include an ML task, ML domain, reference to a dataset, and/or an initial/starting ML model. At operation 602, the MDE 110a obtains an ML model from the modeling engine 115. The obtained model may be an updated/revised version of the initial/starting ML model (if provided) or may be an initial/starting ML model (if one is not included in the MLMC). At operation 603, the MDE 110a obtains a proxy score for the ML model from the proxy feedback engine 120. At operation 604, the MDE 110a provides the proxy score and the obtained ML model to the client device 101. At operation 605, the MDE 110a determines whether training has been triggered, and if not, the MDE 110a loops back to operation 601 to obtain a new or updated MLMC. If training has been triggered, then operation 606 the MDE 110a submits the obtained ML model to the training and validation engine 145 for training the ML model, and then operation 607 provides the trained ML model 150 to the client device 101 (or MDE 110b). After operation 607, the MDE 110a loops back to operation 601 to obtain a new or updated MLMC.

Figure 6 also depicts an example process 600b for operating an the proxy feedback engine 120. Process 600b begins at operation 610 where the proxy feedback engine 120 receives an individual MLMC from the MDE 110a. At operation 611, the proxy feedback engine 120 selects one or more proxy functions from a set of proxy functions based on information in the individual MLMC. At operation 612, the proxy feedback engine 120 determines and/or generates a proxy score for an ML model corresponding to the individual MLMC using the selected one or more proxy functions. At operation 613, the proxy feedback engine 120 provides the determined proxy score to the model analysis engine 140. At operation 614, the proxy feedback engine 120 obtains, from the model analysis engine 140, an updated mapping of actual ML performance metrics to ML models based at least in part on the determined proxy score for generating additional/updated proxy scores for other MLMCs (e.g., these other MLMCs may be submitted by the client device 101 in the future, or by other users operating other client devices 101). After operation 614, the proxy feedback engine 120 loops back to operation 610 obtain another MLMC.

Additional examples of the presently described method, system, and device embodiments include the following, non-limiting implementations. Each of the following non-limiting examples may stand on its own or may be combined in any permutation or combination with any one or more of the other examples provided below or throughout the present disclosure.

Example 1 includes a method for predicting performance metrics for machine learning (ML) models, comprising: generating a set of ML models for respective users; for each ML model in the set of ML models, operating a proxy feedback engine to generate a proxy score for a corresponding ML model in the set of ML models, wherein the proxy score of the corresponding ML model is based on one or more predicted performance metrics for the corresponding ML model; training a subset of ML models from the set of ML models to obtain one or more actual performance metrics for corresponding ML models in the subset of ML models; operating a semi-supervised learning (SSL) mechanism to learn relationships between the one or more actual performance metrics and the corresponding ML models in the subset of ML models; and updating the proxy feedback engine with the learned relationships for generating proxy scores for another set of ML models.

Example 2 includes the method of example 1 and/or some other example(s) herein, wherein the operation of the proxy feedback engine takes place without training the ML models in the set of ML models.

Example 3 includes the method of examples 1-2 and/or some other example(s) herein, wherein operating the proxy feedback engine comprises: selecting a first proxy function from among a plurality of proxy functions for a first ML model in the set of ML models; operating the first proxy function to produce a first proxy score for the first ML model; selecting a second proxy function from among a plurality of proxy functions for a second ML model in the set of ML models; and operating the second proxy function to produce a second proxy score for the first ML model.

Example 4 includes the method of examples 1-3 and/or some other example(s) herein, wherein operating the proxy feedback engine comprises: selecting, for at least one ML model in the set of ML models, two or more proxy functions from among a plurality of proxy functions; individually operating each of the two or more proxy functions to produce respective proxy scores for the at least one ML model; and determining a final proxy score for the at least one ML model based on a combination of the respective proxy scores, a weighted average of the respective proxy scores, using ensemble averaging of the respective proxy scores, or using an ensemble learning method based on the respective proxy scores.

Example 5 includes the method of examples 1-5 and/or some other example(s) herein, wherein the individual ML models are generated for the respective users based on one or more inputs provided by the respective users.

Example 6 includes the method of example 5 and/or some other example(s) herein, wherein the one or more inputs provided by the respective users include an ML task in an ML domain, and wherein operating the proxy feedback engine comprises: selecting, for each ML model in the set of ML models, a proxy function from a plurality of proxy functions based on the ML task and the ML domain provided by the respective users.

Example 7 includes the method of example 6 and/or some other example(s) herein, wherein the one or more inputs provided by the respective users further include hardware platform specifications, and the selection of the proxy function for each ML model is further based on the hardware platform specifications.

Example 8 includes the method of examples 3-7 and/or some other example(s) herein, wherein the plurality of proxy functions include one or more of associative arrays, mapping functions, dictionaries, hash tables, look-up tables (LUTs), linked lists, ML classifiers, parameter counting, computational throughput metrics, Jacobian covariance functions, saliency pruning functions, channel pruning functions, heuristic functions, and hyper-heuristic functions.

Example 8.5 includes the method of examples 1-8 and/or some other example(s) herein, wherein operating the SSL mechanism comprises: training a predictor using a labeled dataset of actual performance metrics; operating the trained predictor on an unlabeled performance metrics dataset to generate a pseudo-labeled performance metrics dataset; and retraining the predictor on the pseudo-labeled performance metrics dataset.

Example 9 includes the method of examples 1-8.5 and/or some other example(s) herein, wherein the SSL mechanism comprises a inductive SSL method or a tranductive SSL method.

Example 10 includes the method of examples 1-9 and/or some other example(s) herein, wherein the SSL mechanism comprises an SSL method selected from a group including a self-training wrapper method, a co-training wrapper method, a boosting wrapper method, an unsupervised pre-processing feature extraction method, an unsupervised pre-processing pre-training method, an unsupervised pre-processing cluster-then-label method, and an intrinsically semi-supervised method, a graph convolutional network (GCN), and a transductive support vector machine (TSVM)

Example 11 includes a method for providing a machine learning model development environment (MDE), the method comprising: obtaining machine learning (ML) inputs from a client device; and in response to receipt of an individual input of the ML inputs from the client device: obtaining an ML model based on the individual input, obtaining a proxy score for the ML model from a proxy feedback engine, wherein the proxy score for the ML model is based on a set of predicted performance metrics for the ML model, at least one of the ML model and the proxy score is used by a semi-supervised learning (SSL) mechanism to learn relationships between actual performance metrics and trained ML models, and the learned relationships are used by the proxy feedback engine for generating proxy scores for other ML models, and providing the ML model and the proxy score to the client device via the interface circuitry.

Example 12 includes the method of example 11 and/or some other example(s) herein, further comprising: operating a server-side MDE application to enable receipt of the ML inputs from the client device; and providing the ML model and the proxy score to be rendered within a client-side MDE application.

Example 13 includes the method of example 12 and/or some other example(s) herein, further comprising: in response to receipt of the individual input of the ML inputs from the client device, obtaining, from an ML operations library, a set of ML operations compatible with the ML model; and providing, via the interface circuitry, the set of ML operations to be rendered within the client-side MDE application.

Example 14 includes the method of examples 11-13 and/or some other example(s) herein, wherein the ML inputs include an ML task and an ML domain, and a proxy function used by the proxy feedback engine to produce the proxy score is based on the ML task and the ML domain.

Example 15 includes the method of example 14 and/or some other example(s) herein, wherein the ML inputs further include hardware platform specifications, and the proxy function used by the proxy feedback engine is further based on the hardware platform specifications.

Example 16 includes the method of examples 11-15 and/or some other example(s) herein, further comprising: obtaining a training command from the client device; providing, based on receipt of the training command, the ML model to a training and validation engine to train the ML model; and providing a fully trained version of the ML model to the client device after completion of the training of the ML model.

Example 17 includes a method of operating a proxy feedback engine of a machine learning (ML) engineering system, the method comprising: obtaining ML model configurations (MLMCs) via an ML model development environment (MDE); selecting one or more proxy functions from a set of proxy functions based on information in the individual MLMC; determining a proxy score for an ML model corresponding to the individual MLMC using the selected one or more proxy functions, wherein the proxy score is based on a set of predicted performance metrics for the ML model; providing the determined proxy score to a model analysis engine via the interface circuitry; and obtaining, from the model analysis engine, an updated mapping of actual ML performance metrics to ML models based at least in part on the determined proxy score for generating proxy scores for other MLMCs.

Example 18 includes the method of example 17 and/or some other example(s) herein, wherein the individual MLMC includes an ML task and an ML domain, and the selection of the proxy function is based on the ML task and the ML domain.

Example 19 includes the method of example 18 and/or some other example(s) herein, wherein the proxy score includes an ML model performance component including one or more predicted performance metrics related to operation of the ML model.

Example 20 includes the method of example 19 and/or some other example(s) herein, wherein the one or more predicted performance metrics of the ML model performance component include one or more of accuracy, precision, negative predictive value (NPV), recall, specificity, false positive rate, false negative rate, F score, markedness, receiver operating characteristic (ROC), area under the ROC curve (AUC), an error value, mean absolute error (MAE), mean reciprocal rank (MRR), mean squared error (MSE), root MSE (RMSE), correlation coefficient (R), coefficient of determination (R²), cumulative gain (CG), discounted CG (DCG), normalized DCG (NDCG), Intersection over Union (IoU), perplexity, Wasserstein metric, Fréchet inception distance (FID), and Damerau-Levenshtein distance.

Example 21 includes the method of examples 18-20 and/or some other example(s) herein, wherein the individual MLMC further includes hardware platform specifications, and the selection of the proxy function is further based on the hardware platform specifications.

Example 22 includes the method of example 21 and/or some other example(s) herein, wherein the proxy score includes a platform performance component including one or more predicted performance metrics performance of a hardware platform that is to operate the ML model.

Example 23 includes the method of example 22 and/or some other example(s) herein, wherein wherein the one or more predicted performance metrics of the platform performance component include one or more of latency, throughput, power consumption, execution time, memory footprint, memory utilization, processor utilization, processor time, number of computations, instructions per second (IPS), and floating point operations per second (FLOPS).

Example 24 includes the method of example 17 and/or some other example(s) herein, further comprising: selecting at least two proxy functions from among the set of proxy functions; individually operating each of the at least two proxy functions to produce respective proxy scores for the individual MLMC; and determining a final proxy score for the individual MLMC based on a combination of the respective proxy scores, a weighted average of the respective proxy scores, using ensemble averaging of the respective proxy scores, or using an ensemble learning method based on the respective proxy scores.

Example 25 includes the method of example 17 and/or some other example(s) herein, wherein the plurality of proxy functions include one or more of associative arrays, mapping functions, dictionaries, hash tables, look-up tables (LUTs), linked lists, ML classifiers, parameter counting, computational throughput metrics, Jacobian covariance functions, saliency pruning functions, channel pruning functions, heuristic functions, and hyper-heuristic functions.

Example Z01 includes one or more computer readable media comprising instructions, wherein execution of the instructions by processor circuitry is to cause the processor circuitry to perform the method of any one of examples 1-25 and/or any other aspect discussed herein. Example Z02 includes a computer program comprising the instructions of example Z01. Example Z03 includes an Application Programming Interface defining functions, methods, variables, data structures, and/or protocols for the computer program of example Z02. Example Z04 includes an apparatus comprising circuitry loaded with the instructions of example Z01. Example Z05 includes an apparatus comprising circuitry operable to run the instructions of example Z01. Example Z06 includes an integrated circuit comprising one or more of the processor circuitry of example Z01 and the one or more computer readable media of example Z01. Example Z07 includes a computing system comprising the one or more computer readable media and the processor circuitry of example Z01. Example Z08 includes an apparatus comprising means for executing the instructions of example Z01. Example Z09 includes a signal generated as a result of executing the instructions of example Z01. Example Z10 includes a data unit generated as a result of executing the instructions of example Z01. Example Z11 includes the data unit of example Z10, the data unit is a datagram, network packet, data frame, data segment, a Protocol Data Unit (PDU), a Service Data Unit (SDU), a message, or a database object. Example Z12 includes a signal encoded with the data unit of example Z10 or Z11. Example Z13 includes an electromagnetic signal carrying the instructions of example Z01. Example Z14 includes an apparatus comprising means for performing the method of any one of examples 1-25.

### 5. TERMINOLOGY

As used herein, the singular forms "a," "an" and "the" are intended to include plural forms as well, unless the context clearly indicates otherwise. It will be further understood that the terms "comprises" and/or "comprising," when used in this specification, specific the presence of stated features, integers, steps, operations, elements, and/or components, but do not preclude the presence or addition of one or more other features, integers, steps, operation, elements, components, and/or groups thereof. The phrase "A and/or B" means (A), (B), or (A and B). For the purposes of the present disclosure, the phrase "A, B, and/or C" means (A), (B), (C), (A and B), (A and C), (B and C), or (A, B and C). The description may use the phrases "in an embodiment," or "In some embodiments," each of which may refer to one or more of the same or different embodiments. Furthermore, the terms "comprising," "including," "having," and the like, as used with respect to the present disclosure, are synonymous.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "establish" or "establishment" at least in some embodiments refers to (partial or in full) acts, tasks, operations, etc., related to bringing or the readying the bringing of something into existence either actively or passively (e.g., exposing a device identity or entity identity). Additionally or alternatively, the term "establish" or "establishment" at least in some embodiments refers to (partial or in full) acts, tasks, operations, etc., related to initiating, starting, or warming communication or initiating, starting, or warming a relationship between two entities or elements (e.g., establish a session, establish a session, etc.). Additionally or alternatively, the term "establish" or "establishment" at least in some embodiments refers to initiating something to a state of working readiness. The term "established" at least in some embodiments refers to a state of being operational or ready for use (e.g., full establishment). Furthermore, any definition for the term "establish" or "establishment" defined in any specification or standard can be used for purposes of the present disclosure and such definitions are not disavowed by any of the aforementioned definitions.

The term "obtain" at least in some embodiments refers to (partial or in full) acts, tasks, operations, etc., of intercepting, movement, copying, retrieval, or acquisition (e.g., from a memory, an interface, or a buffer), on the original packet stream or on a copy (e.g., a new instance) of the packet stream. Other aspects of obtaining or receiving may involving instantiating, enabling, or controlling the ability to obtain or receive the stream of packets (or the following parameters and templates or template values).

The term "element" at least in some embodiments refers to a unit that is indivisible at a given level of abstraction and has a clearly defined boundary, wherein an element may be any type of entity including, for example, one or more devices, systems, controllers, network elements, modules, etc., or combinations thereof.

The term "measurement" at least in some embodiments refers to the observation and/or quantification of attributes of an object, event, or phenomenon.

The term "accuracy" at least in some embodiments refers to the closeness of one or more measurements to a specific value. The term "precision" at least in some embodiments refers to the closeness of the two or more measurements to each other.

The term "signal" at least in some embodiments refers to an observable change in a quality and/or quantity. Additionally or alternatively, the term "signal" at least in some embodiments refers to a function that conveys information about of an object, event, or phenomenon. Additionally or alternatively, the term "signal" at least in some embodiments refers to any time varying voltage, current, or electromagnetic wave that may or may not carry information. The term "digital signal" at least in some embodiments refers to a signal that is constructed from a discrete set of waveforms of a physical quantity so as to represent a sequence of discrete values.

The term "circuitry" at least in some embodiments refers to a circuit or system of multiple circuits configured to perform a particular function in an electronic device. The circuit or system of circuits may be part of, or include one or more hardware components, such as a logic circuit, a processor (shared, dedicated, or group) and/or memory (shared, dedicated, or group), an ASIC, a FPGA, programmable logic controller (PLC), SoC, SiP, multi-chip package (MCP), DSP, etc., that are configured to provide the described functionality. In addition, the term "circuitry" may also refer to a combination of one or more hardware elements with the program code used to carry out the functionality of that program code. Some types of circuitry may execute one or more software or firmware programs to provide at least some of the described functionality. Such a combination of hardware elements and program code may be referred to as a particular type of circuitry.

It should be understood that the functional units or capabilities described in this specification may have been referred to or labeled as components or modules, in order to more particularly emphasize their implementation independence. Such components may be embodied by any number of software or hardware forms. For example, a component or module may be implemented as a hardware circuit comprising custom very-large-scale integration (VLSI) circuits or gate arrays, off-the-shelf semiconductors such as logic chips, transistors, or other discrete components. A component or module may also be implemented in programmable hardware devices such as field programmable gate arrays, programmable array logic, programmable logic devices, or the like. Components or modules may also be implemented in software for execution by various types of processors. An identified component or module of executable code may, for instance, comprise one or more physical or logical blocks of computer instructions, which may, for instance, be organized as an object, procedure, or function. Nevertheless, the executables of an identified component or module need not be physically located together but may comprise disparate instructions stored in different locations which, when joined logically together, comprise the component or module and achieve the stated purpose for the component or module.

Indeed, a component or module of executable code may be a single instruction, or many instructions, and may even be distributed over several different code segments, among different programs, and across several memory devices or processing systems. In particular, some aspects of the described process (such as code rewriting and code analysis) may take place on a different processing system (e.g., in a computer in a data center) than that in which the code is deployed (e.g., in a computer embedded in a sensor or robot). Similarly, operational data may be identified and illustrated herein within components or modules and may be embodied in any suitable form and organized within any suitable type of data structure. The operational data may be collected as a single data set or may be distributed over different locations including over different storage devices, and may exist, at least partially, merely as electronic signals on a system or network. The components or modules may be passive or active, including agents operable to perform desired functions.

The term "processor circuitry" at least in some embodiments refers to, is part of, or includes circuitry capable of sequentially and automatically carrying out a sequence of arithmetic or logical operations, or recording, storing, and/or transferring digital data. The term "processor circuitry" at least in some embodiments refers to one or more application processors, one or more baseband processors, a physical CPU, a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "memory" and/or "memory circuitry" at least in some embodiments refers to one or more hardware devices for storing data, including RAM, MRAM, PRAM, DRAM, and/or SDRAM, core memory, ROM, magnetic disk storage mediums, optical storage mediums, flash memory devices or other machine readable mediums for storing data. The term "computer-readable medium" may include, but is not limited to, memory, portable or fixed storage devices, optical storage devices, and various other mediums capable of storing, containing or carrying instructions or data.

The term "interface circuitry" at least in some embodiments refers to, is part of, or includes circuitry that enables the exchange of information between two or more components or devices. The term "interface circuitry" at least in some embodiments refers to one or more hardware interfaces, for example, buses, I/O interfaces, peripheral component interfaces, network interface cards, and/or the like.

The term "device" at least in some embodiments refers to a physical entity embedded inside, or attached to, another physical entity in its vicinity, with capabilities to convey digital information from or to that physical entity.

The term "entity" at least in some embodiments refers to a distinct component of an architecture or device, or information transferred as a payload.

The term "controller" at least in some embodiments refers to an element or entity that has the capability to affect a physical entity, such as by changing its state or causing the physical entity to move.

The term "compute node" or "compute device" at least in some embodiments refers to an identifiable entity implementing an aspect of computing operations, whether part of a larger system, distributed collection of systems, or a standalone apparatus. In some examples, a compute node may be referred to as a "computing device", "computing system", or the like, whether in operation as a client, server, or intermediate entity. Specific implementations of a compute node may be incorporated into a server, base station, gateway, road side unit, on-premise unit, user equipment (UE), end consuming device, appliance, or the like.

The term "computer system" at least in some embodiments refers to any type interconnected electronic devices, computer devices, or components thereof. Additionally, the terms "computer system" and/or "system" at least in some embodiments refer to various components of a computer that are communicatively coupled with one another. Furthermore, the term "computer system" and/or "system" at least in some embodiments refer to multiple computer devices and/or multiple computing systems that are communicatively coupled with one another and configured to share computing and/or networking resources.

The term "architecture" at least in some embodiments refers to a computer architecture or a network architecture. A "computer architecture" is a physical and logical design or arrangement of software and/or hardware elements in a computing system or platform including technology standards for interacts therebetween. A "network architecture" is a physical and logical design or arrangement of software and/or hardware elements in a network including communication protocols, interfaces, and media transmission.

The term "appliance," "computer appliance," or the like, at least in some embodiments refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "user equipment" or "UE" at least in some embodiments refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, station, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface. Examples of UEs, client devices, etc., include desktop computers, workstations, laptop computers, mobile data terminals, smartphones, tablet computers, wearable devices, machine-to-machine (M2M) devices, machine-type communication (MTC) devices, Internet of Things (IoT) devices, embedded systems, sensors, autonomous vehicles, drones, robots, in-vehicle infotainment systems, instrument clusters, onboard diagnostic devices, dashtop mobile equipment, electronic engine management systems, electronic/engine control units/modules, microcontrollers, control module, server devices, network appliances, head-up display (HUD) devices, helmut-mounted display devices, augmented reality (AR) devices, virtual reality (VR) devices, mixed reality (MR) devices, and/or other like systems or devices.

The term "network element" at least in some embodiments refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, network access node (NAN), base station, access point (AP), RAN device, RAN node, gateway, server, network applicance, network function (NF), virtualized NF (VNF), and/or the like.

The term "application" at least in some embodiments refers to to a computer program designed to carry out a specific task other than one relating to the operation of the computer itself. Additionally or alternatively, term "application" at least in some embodiments refers to to a complete and deployable package, environment to achieve a certain function in an operational environment.

The term "algorithm" at least in some embodiments refers to an unambiguous specification of how to solve a problem or a class of problems by performing calculations, input/output operations, data processing, automated reasoning tasks, and/or the like.

The terms "instantiate," "instantiation," and the like at least in some embodiments refers to the creation of an instance. An "instance" also at least in some embodiments refers to a concrete occurrence of an object, which may occur, for example, during execution of program code.

The term "reference" at least in some embodiments refers to data useable to locate other data and may be implemented a variety of ways (e.g., a pointer, an index, a handle, a key, an identifier, a hyperlink, etc.).

The term "artificial intelligence" or "AI" at least in some embodiments refers to any intelligence demonstrated by machines, in contrast to the natural intelligence displayed by humans and other animals. Additionally or alternatively, the term "artificial intelligence" or "AI" at least in some embodiments refers to the study of "intelligent agents" and/or any device that perceives its environment and takes actions that maximize its chance of successfully achieving a goal.

The term "intelligent agent" at least in some embodiments refers to an a software agent or other autonomous entity which acts, directing its activity towards achieving goals upon an environment using observation through sensors and consequent actuators (i.e. it is intelligent). Intelligent agents may also learn or use knowledge to achieve their goals.

The term "optimization" at least in some embodiments refers to an act, process, or methodology of making something (e.g., a design, system, or decision) as fully perfect, functional, or effective as possible. Optimization usually includes mathematical procedures such as finding the maximum or minimum of a function. The term "optimal" at least in some embodiments refers to a most desirable or satisfactory end, outcome, or output. The term "optimum" at least in some embodiments refers to an amount or degree of something that is most favorable to some end. The term "optima" at least in some embodiments refers to a condition, degree, amount, or compromise that produces a best possible result. Additionally or alternatively, the term "optima" at least in some embodiments refers to a most favorable or advantageous outcome or result.

The term "ensemble averaging" at least in some embodiments refers to the process of creating multiple models (or multiple proxy functions) and combining them to produce a desired output, as opposed to creating just one model. The term "ensemble learning" or "ensemble method" at least in some embodiments refers to using multiple learning algorithms (or multiple proxy functions) to obtain better predictive performance than could be obtained from any of the constituent learning algorithms alone.

The term "covariance" at least in some embodiments refers to a measure of the joint variability of two random variables, wherein the covariance is positive if the greater values of one variable mainly correspond with the greater values of the other variable (and the same holds for the lesser values such that the variables tend to show similar behavior), and the covariance is negative when the greater values of one variable mainly correspond to the lesser values of the other.

The term "relation" at least in some embodiments refers to a manner in which two or more concepts, objects, elements, etc., are connected to one another. Additionally or alternatively, the term "relation" at least in some embodiments refers to a data structure that includes a set of attributes and a set of tuples that share the same (data) type.

The term "map" or "mapping" at least in some embodiments refers to a data item or data structure that includes one or more attribute-value pairs (AVPs), key-value pairs (KVPs), tuples, and/or other like data representation. A "map" may be in the form of an associative array, symbol table, dictionary, mapping function, hash table, look-up table, linked list, search tree, database objects (e.g., database records, database fields, attributes, associations between data and/or database entities (also referred to as "relations"), etc.), blocks and/or links between blocks in block chain implementations, and/or some other suitable data structure.

Although these implementations have been described with reference to specific exemplary aspects, it will be evident that various modifications and changes may be made to these aspects without departing from the broader scope of the present disclosure. Many of the arrangements and processes described herein can be used in combination or in parallel implementations to provide greater bandwidth/throughput and to support edge services selections that can be made available to the edge systems being serviced. Accordingly, the specification and drawings are to be regarded in an illustrative rather than a restrictive sense. The accompanying drawings that form a part hereof show, by way of illustration, and not of limitation, specific aspects in which the subject matter may be practiced. The aspects illustrated are described in sufficient detail to enable those skilled in the art to practice the teachings disclosed herein. Other aspects may be utilized and derived therefrom, such that structural and logical substitutions and changes may be made without departing from the scope of this disclosure. This Detailed Description, therefore, is not to be taken in a limiting sense, and the scope of various aspects is defined only by the appended claims, along with the full range of equivalents to which such claims are entitled.

Such aspects of the inventive subject matter may be referred to herein, individually and/or collectively, merely for convenience and without intending to voluntarily limit the scope of this application to any single aspect or inventive concept if more than one is in fact disclosed. Thus, although specific aspects have been illustrated and described herein, it should be appreciated that any arrangement calculated to achieve the same purpose may be substituted for the specific aspects shown. This disclosure is intended to cover any and all adaptations or variations of various aspects. Combinations of the above aspects and other aspects not specifically described herein will be apparent to those of skill in the art upon reviewing the above description.

## Claims

1. A method for predicting performance metrics for machine learning models, to the method comprising:
generating a set of machine learning models for respective users;
operating, for each machine learning model in the set of machine learning models, a proxy feedback engine to generate a proxy score for a corresponding machine learning model in the set of machine learning models, wherein the proxy score of the corresponding machine learning model is based on one or more predicted performance metrics for the corresponding machine learning model;
training a subset of machine learning models from the set of machine learning models to obtain one or more actual performance metrics for corresponding machine learning models in the subset of machine learning models;
operating a semi-supervised learning (SSL) mechanism to learn relationships between the one or more actual performance metrics and the corresponding machine learning models in the subset of machine learning models; and
updating the proxy feedback engine with the learned relationships for generating proxy scores for another set of machine learning models.

2. The method of claim 1, wherein the operation of the proxy feedback engine takes place without training the machine learning models in the set of machine learning models.

3. The method of claims 1-2, wherein, to operate the proxy feedback engine, execution of the instructions is to cause the computing system to:
select a first proxy function from among a plurality of proxy functions for a first machine learning model in the set of machine learning models;
operate the first proxy function to produce a first proxy score for the first machine learning model;
select a second proxy function from among a plurality of proxy functions for a second machine learning model in the set of machine learning models; and
operate the second proxy function to produce a second proxy score for the first machine learning model.

4. The method of claims 1-3, wherein, to operate the proxy feedback engine, execution of the instructions is to cause the computing system to:
select, for at least one machine learning model in the set of machine learning models, two or more proxy functions from among a plurality of proxy functions;
individually operate each of the two or more proxy functions to produce respective proxy scores for the at least one machine learning model; and
determine a final proxy score for the at least one machine learning model based on a combination of the respective proxy scores, a weighted average of the respective proxy scores, using ensemble averaging of the respective proxy scores, or using an ensemble learning method based on the respective proxy scores.

5. The method of claims 1-4, wherein the individual machine learning models are generated for the respective users based on one or more inputs provided by the respective users.

6. The method of claim 5, wherein the one or more inputs provided by the respective users include an machine learning task in an machine learning domain, and wherein, to operate the proxy feedback engine, execution of the instructions is to cause the computing system to:
select, for each machine learning model in the set of machine learning models, a proxy function from a plurality of proxy functions based on the machine learning task and the machine learning domain provided by the respective users.

7. The method of claim 6, wherein the one or more inputs provided by the respective users further include hardware platform specifications, and the selection of the proxy function for each machine learning model is further based on the hardware platform specifications.

8. The method of claims 3-7, wherein the plurality of proxy functions include one or more of associative arrays, mapping functions, dictionaries, hash tables, look-up tables (LUTs), linked lists, machine learning classifiers, parameter counting, computational throughput metrics, Jacobian covariance functions, saliency pruning functions, channel pruning functions, heuristic functions, and hyper-heuristic functions.

9. The method of claims 1-8, wherein the SSL mechanism comprises an inductive SSL method or a transductive SSL method, and wherein the SSL mechanism comprises an SSL method selected from a group including a self-training wrapper method, a co-training wrapper method, a boosting wrapper method, an unsupervised pre-processing feature extraction method, an unsupervised pre-processing pre-training method, an unsupervised pre-processing cluster-then-label method, and an intrinsically semi-supervised method, a graph convolutional network (GCN), and a transductive support vector machine (TSVM).

10. A non-transitory computer readable storage medium comprising instructions for predicting performance metrics for machine learning models, wherein execution of the instructions by one or more processors of a computing system is to cause the computing system to perform the method of claims 1-9.

11. An apparatus for providing a machine learning model development environment (MDE), the apparatus comprising:
interface circuitry to obtain machine learning inputs from a client device; and
processor circuitry communicatively coupled with the interface circuitry, wherein the processor circuitry is, in response to receipt of an individual input of the machine learning inputs from the client device, to:
obtain an machine learning model based on the individual input,
obtain a proxy score for the machine learning model from a proxy feedback engine, wherein:
the proxy score for the machine learning model is based on a set of predicted performance metrics for the machine learning model,
at least one of the machine learning model and the proxy score is used by a semi-supervised learning (SSL) mechanism to learn relationships between actual performance metrics and trained machine learning models, and
the learned relationships are used by the proxy feedback engine for generating proxy scores for other machine learning models, and
provide the machine learning model and the proxy score to the client device via the interface circuitry.

12. The apparatus of claim 11, wherein the processor circuitry is further to:
operate a server-side MDE application to enable receipt of the machine learning inputs from the client device; and
provide the machine learning model and the proxy score to be rendered within a client-side MDE application.

13. The apparatus of claim 12, wherein the processor circuitry is, in response to receipt of the individual input of the machine learning inputs from the client device, further to:
obtain, from an machine learning operations library, a set of machine learning operations compatible with the machine learning model; and
provide, via the interface circuitry, the set of machine learning operations to be rendered within the client-side MDE application.

14. The apparatus of claims 11-13, wherein the machine learning inputs include a machine learning task, a machine learning domain, and hardware platform specifications, and wherein a proxy function used by the proxy feedback engine to produce the proxy score is based on the machine learning task, the machine learning domain, and the hardware platform specifications.

15. The apparatus of claims 11-14, wherein the interface circuitry is further to:
obtain a training command from the client device;
provide, based on receipt of the training command, the machine learning model to a training and validation engine to train the machine learning model; and
provide a fully trained version of the machine learning model to the client device after completion of the training of the machine learning model.
